Europäisches Patentamt

European Patent Office

Office européen des brevets

(19)

(11) EP 0 485 465 B1

(12) **EUROPEAN PATENT SPECIFICATION**

(45) Date of publication and mention of the grant of the patent:
**24.09.1997  Bulletin 1997/39**

(21) Application number: **90911926.5**

(22) Date of filing: **09.08.1990**

(51) Int Cl.6: **F02B 53/00**, F01C 3/02

(86) International application number:
**PCT/US90/04416**

(87) International publication number:
**WO 91/02145 (21.02.1991 Gazette 1991/05)**

(54) **TOROIDAL HYPER-EXPANSION ROTARY ENGINE, COMPRESSOR, EXPANDER, PUMP AND METHOD**

TORODIALE HYPEREXPANDIERENDE ROTIERENDE MASCHINE, VERDICHTER, PUMPE UND EXPANSIONSGERÄT

MOTEUR ROTATIF, TORO DALE A HYPEREXPANSION, COMPRESSEUR, EXPANSEUR, POMPE ET PROCEDE

(84) Designated Contracting States:
**AT BE CH DE DK ES FR GB IT LI LU NL SE**

(30) Priority: **11.08.1989  US 392450**
**26.01.1990  US 471845**
**31.05.1990  US 531501**

(43) Date of publication of application:
**20.05.1992  Bulletin 1992/21**

(73) Proprietor: **MECHANOLOGY**
**San Rafael, CA 94903 (US)**

(72) Inventor: **CHOMYSZAK, Stephen, M.**
**Attleboro, MA 02703 (US)**

(74) Representative: **Mayes, Stuart David et al**
**BOULT WADE TENNANT,**
**27 Furnival Street**
**London EC4A 1PQ (GB)**

(56) References cited:
**EP-A- 0 091 975**          **GB-A- 936 283**
**US-A- 1 618 360**          **US-A- 2 232 702**
**US-A- 2 674 982**          **US-A- 3 208 437**
**US-A- 3 809 022**          **US-A- 3 841 276**
**US-A- 4 434 757**

**Description**

**BACKGROUND OF THE INVENTION**

**1. Field of the Invention**:

The present invention relates generally to a positive displacement engine, compressor, expander and pump and method having two or more rotors oriented such that, as they rotate, they provide sufficient changes in volume, allowing a cyclic pumping action to take place, which enables intake, compression, hyper-expansion and exhaust of a working fluid. More particularly, it relates to such an engine in which the expansion phase of its thermodynamic cycle has been modified to allow the expansion of gases to a volume which is larger than the original intake volume.

2. Description of the Prior Art:

It is known to provide machines incorporating intermeshing rotors in which the machine has a spherical geometry. With machines of this type the outer peripheral surface of one of the rotors is transversely convex while the inner peripheral surface of the other rotor is transversely concave. However, the axes of rotation of the two rotors must intersect. Examples of machines having a spherical geometry may be found in EP-A-0,091,975 and GB-A-936,283.

It is also known to provide machines of the above type having a cylindrical geometry. With machines of this type the axes of rotation of the two rotors do not intersect but the outer peripheral surfaces of all the vanes and rotors are transversely concave in order to promote sealing. Particularly clear reference to this can be found at column 4, line 66 of US-A-2,674,982 and column 2, line 58 of US-A-3,060,910.

While this prior art shows the feasibility of the general concept of such machines, the designs disclosed in these patents do not take full advantage of the potential efficiencies of such machines.

**SUMMARY OF THE INVENTION**

Accordingly, it is an object of this invention to provide a machine incorporating intermeshing rotors to form combustion and ignition/expansion chambers which takes increased advantage of the potential efficiencies of such machines.

It is another object of the invention to provide such a machine in which each of the intermeshed rotors provides for both intake and combustion/exhaust.

It is a further object of the invention to provide such a machine in which the intermeshing rotors are configured so that expansion of the gases comprising the working fluid of the machine takes place to a volume greater than the original intake volume.

It is still another object of the invention to provide such a machine with a substantially increased intake duration, so that the machine is not starved for air.

It is a further object of the invention to provide such a machine in which intake duration is independent of the number of compressors in the machine.

It is yet another object of the invention to provide such a machine in which intake and compression occur in a different location than expansion and exhaust.

It is a still further object of the invention to provide such a machine in which meshing surfaces used to form chambers in the machine have a surface configuration to enhance contact and sealing.

It is another object of the invention to provide such a machine in which each phase of the machine's thermodynamic cycle can be customized.

It is a further object of the invention to provide such a machine in which a change of gear ratio gives a direct change in an included angle of compression vanes and chambers.

It is still another object of the invention to provide such a machine in which a change in gear ratio changes the amount of displacement processed per unit time without changing machine size.

It is a still further object of the invention to provide such a machine in which vanes of rotors are used as mechanical timing devices for fuel injection and ignition, and as valves which open and close fuel injection ports and mask and unmask ignition devices.

It is yet another object of the invention to provide such a machine having an easily assembled, modular engine block.

According to the present invention there is provided an intersecting vane machine, which comprises a supporting structure having an inside surface, first and second intermeshing rotors rotatably mounted in said supporting structure, said first rotor having a plurality of first vanes with an inner peripheral surface of said first rotor and said first vanes being transversely concave, with spaces between consecutive pairs of said first vanes and said inside surface defining a plurality of primary chambers, said second rotor having a plurality of second vanes with an outer peripheral surface of said second rotor and said second vanes being transversely convex, with spaces between consecutive pairs of said second vanes and said inside surface defining a plurality of secondary chambers, with a first axis of rotation of said first rotor and a second axis of rotation of said second rotor arranged so that said axes of rotation do not intersect, and said first rotor and said second rotor being arranged so that each of said first vanes and said primary chambers and said second vanes and said secondary chambers pass through a singular common intersection.

A number of embodiments of the present invention will now be described by way of example with reference to the accompanying drawings in which:

Figure 1 is a perspective view of a portion of an engine in accordance with the invention.

Figure 2 is a somewhat schematic cross-section view, taken generally through the line 2-2 in Figure 1.

Figure 3 is a cross-section view, taken along the line 3-3 in Figure 1, but with additional structure of an engine in accordance with the invention.

Figure 4 is a perspective view corresponding to that of Figure 1, but with the additional structure shown in Figure 3 in place.

Figures 5-8 are successive cross-section views, taken along the line 5-5 in Figure 2, showing operation of the engine of Figures 1-4.

Figure 9 is an external perspective view of the engine of Figures 1-8.

Figure 10 is a perspective view of another embodiment of an engine in accordance with the invention.

Figure 11 is a cross-sectional view of the engine in Figure 10, taken along the line A-A of Figure 12.

Figure 12 is a partial cross sectional view and elevation of the engine in Figures 10 and 11, looking in the direction of B (along the main shaft) in Figure 11.

Figure 13 is a perspective view of the assembled engine in Figures 10-12, showing outer components and enclosures of the proposed engine.

Figure 14 is an elevation view and representation of the assembly sequence for assembling block sectors of the engine in Figures 10-13.

Figure 15 is a perspective view of the rear of a portion of the engine in Figures 10-14.

Figure 16 is a perspective view of a block sector for the engine of Figures 10-15.

Figure 17 is another perspective view of the block sector in Figure 16.

Figure 18 is a perspective view of expansion vane for the engine of Figures 10-15.

Figure 19 is another perspective view of the expansion vane in Figure 18.

Figures 20-24 are sequential diagrams of a portion of the engines of Figures 10-15, showing its operation.

Figures 25-32 show prior art engine cycle diagrams and cycle diagrams for the engine of this invention.

Figure 33 shows a simplified elevation view of a portion of the engine of Figures 10-15, looking along direction B of FIGURE 11.

Figure 34 is a simplified elevation of another portion of the engine in Figures 10-15.

Figures 35A-35B and Figures 36A-36B are corresponding side and end views of the expansion vane for the engine of Figures 10-15 and of an expansion vane of a further embodiment of an engine in accordance with the invention.

Figures 37A-37B and Figures 38A-38B are corresponding side and end views of the compression vane for the engine of Figures 10-15 and of a compression vane of the further embodiment of an engine in accordance with the invention.

Figures 39A and 39B are corresponding plan views of vane tracks for the engine of Figures 10-15 and the further embodiment of an engine in accordance with the invention.

Figures 40-44 are sequential diagrams of a portion of the further embodiment of an engine in accordance with the invention, showing its operation.

Figure 45 is a perspective view of an intersecting vane machine in accordance with the invention that can be used as a positive displacement compressor, expander or pump.

Figures 46A-46B and 47A-47B are plan and end views of rotors used in the intersecting vane machine of Figure 45.

Figures 48A-48B, 49A-49B and 50A-50B are plan views of different rotor configurations used in the intersecting vane machine of Figure 45.

Figures 51-54 are sequential diagrams of a portion of the machine of Figure 45, showing its operation.

Figures 55 and 56 are perspective views of a primary vane for the machine of Figure 45.

Figures 57-59 are block diagrams of different configurations for the machine of Figure 45.

## DETAILED DESCRIPTION OF THE INVENTION

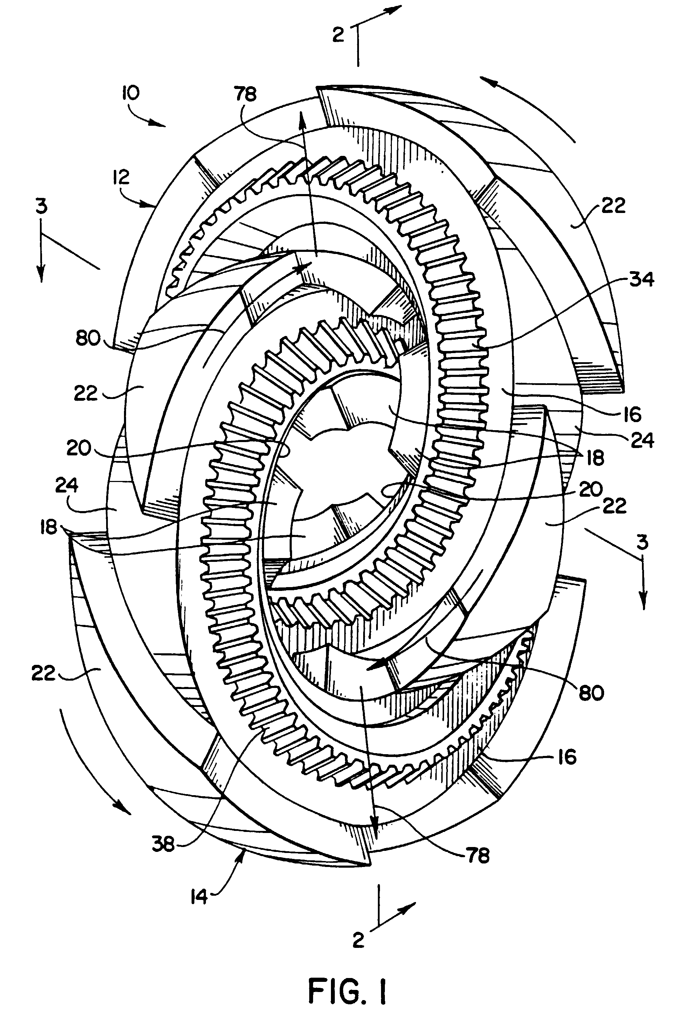

Turning now to the drawings, more particularly to Figure 1, there is shown a portion of an engine 10 in accordance with the invention. The engine 10 has a pair of intermeshing rotors 12 and 14. In addition to intermeshing, the rotors 12 and 14 are interlocked by having each rotor 12 and 14 pass through a center portion of the other rotor 14 and 12.

Each of the rotors 12 and 14 consists of a wheel 16 supporting intake/compression vanes 18 on inner surface 20 of each rotor 12 and 14 and expansion/exhaust vanes 22 on outer surface 24 of each rotor 12 and 14. The wheel 16 of each rotor 12 and 14 also provides for the attachment of components to the side of the wheel 16 which allow useful work to be extracted from the rotors 12 and 14 as they spin, such as gears, pulleys, and cams, and for any necessary bearings or bearing surfaces to provide support for the rotors 12 and 14. In Figure 1, the rotors 12 and 14 are each shown with four intake/compression vanes 18 and four expansion/exhaust vanes 22; however, the number of vanes is not limited to four.

In operation of the engine 10, the intake/compression vanes 18 of rotor 12 interact with the expansion/exhaust vanes 22 of rotor 14, and the intake/compression vanes 18 of rotor 14 interact with the expansion/exhaust vanes 22 of rotor 12. This interaction allows both rotors 12 and 14 to produce useful work.

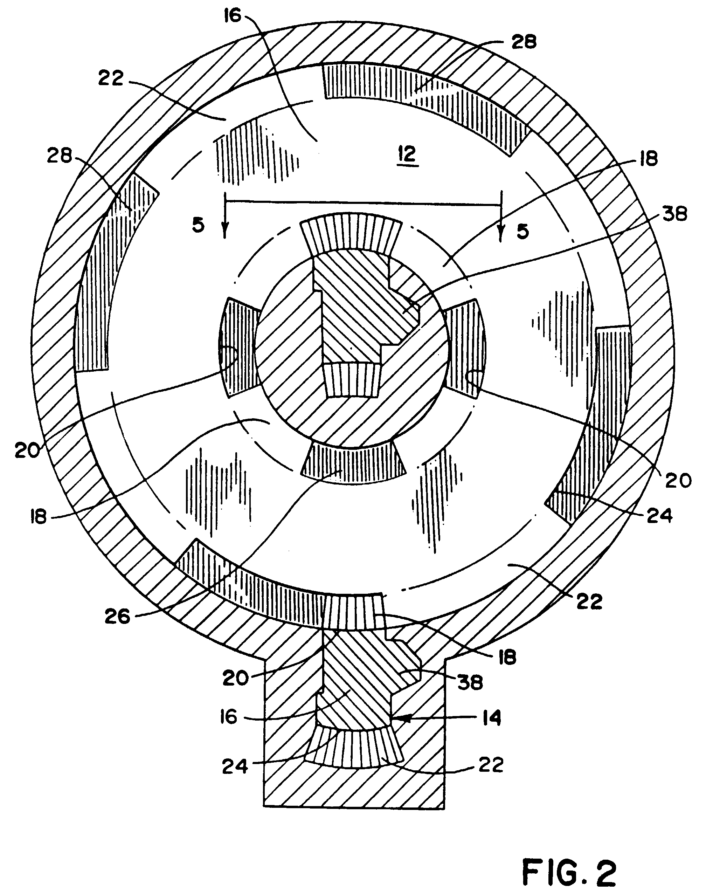

Figure 2 shows a cross-section of the rotor 14 as it interacts with the rotor 12. This figure shows general cross-sections of the intake/compression and expansion/exhaust vanes 18 and 22, as well as the inherent toroidal geometry of the rotors 12 and 14. As shown, the thickness of the wheel 16 need not be consistent from the intake/compression vane 18 to the expansion/exhaust vane 22. This change in thickness is one of the features utilized to increase the expansion ratio from intake volume of the intake/compression chamber 26 to exhaust volume of the expansion/exhaust chamber 28, called "hyper-expansion" in this application. The other feature of the rotor geometry used to allow hyper-expansion is the difference in mean diameters between the intake/compression vanes 18 and the expansion/exhaust vanes 22. The hyper-expansion of the intake volume of chambers 26 into the expansion volume of the chambers 28 following combustion is a most important aspect of the engine 10. This hyper-expansion allows for increased thermodynamic efficiencies.

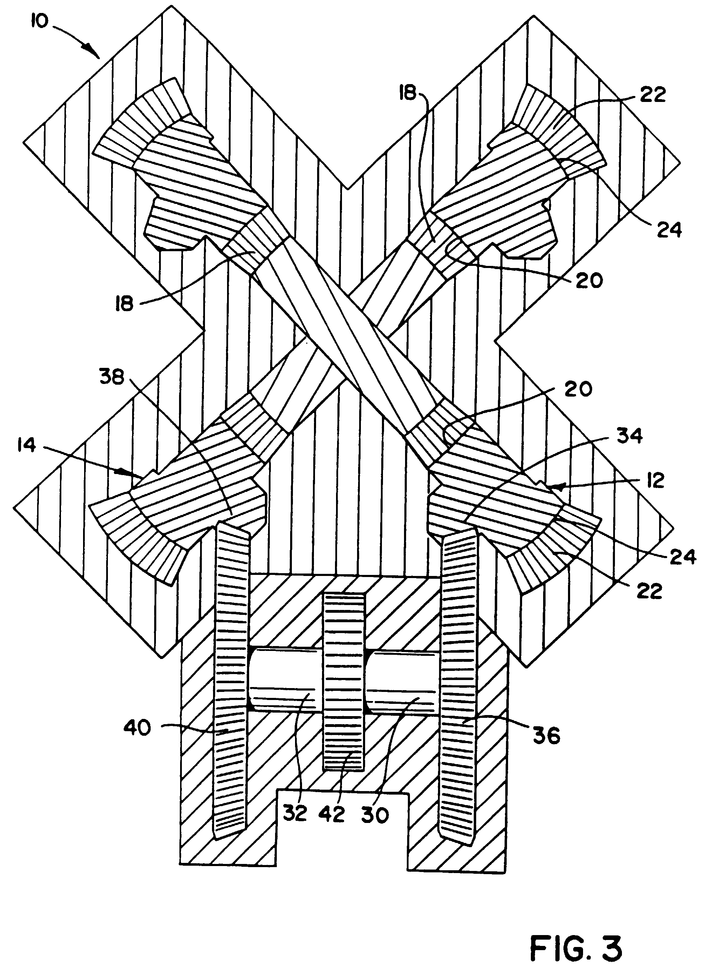

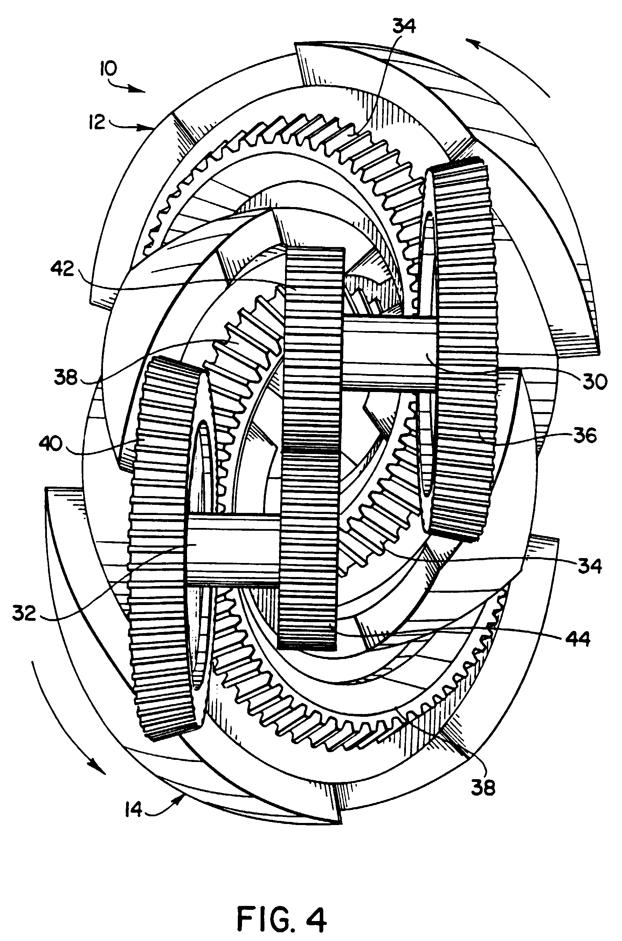

Figures 3 and 4 show the two rotors 12 and 14 engaged to output shafts 30 and 32 by bevel gears 34, 36, 38 and 40. The output shafts 30 and 32 are in turn engaged with each other by spur gears 42 and 44. The output shafts 30 and 32 provide a means of power take-off from each of the rotors 12 and 14 and help to synchronize the rotors 12 and 14 as they spin.

It is possible to arrange the vanes 18 and 22 of each rotor 12 and 14 so that there is no way except catastrophic failure for the rotors 12 and 14 to fall out of synchronization without the output shafts, but this would make it necessary for one of the rotors 12 or 14 to drive the other via their respective vanes 18 and 22. This is not impossible, but would require more study of the most efficient surface needed to provide adequate sealing between vanes 18 and 22 and the least amount of friction generated while driving the rotors 12 and 14.

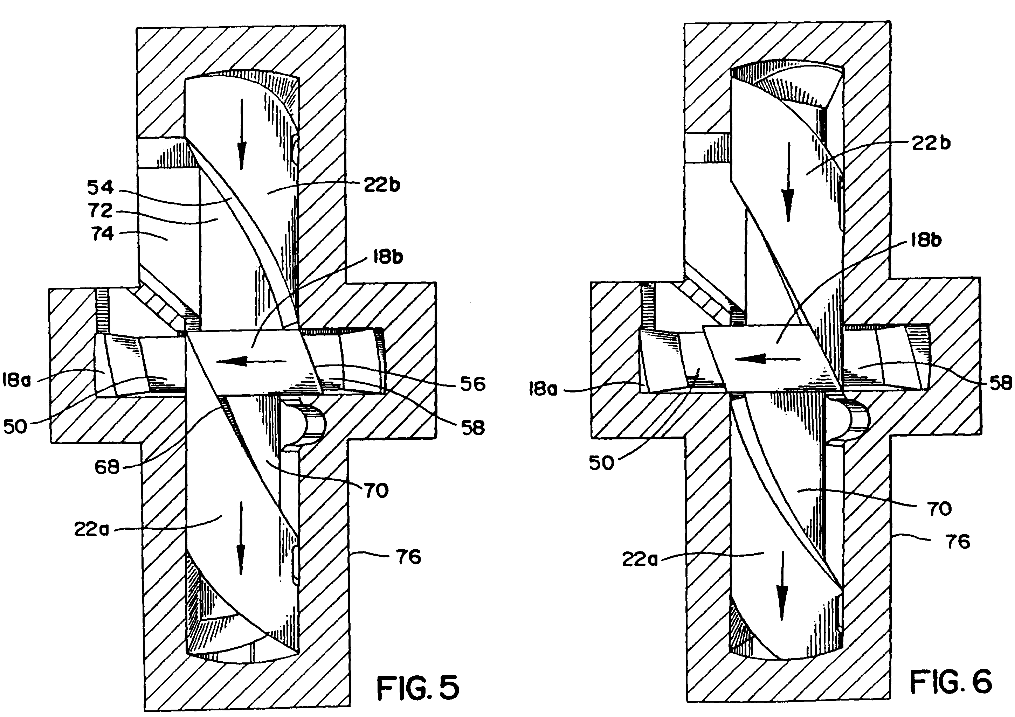

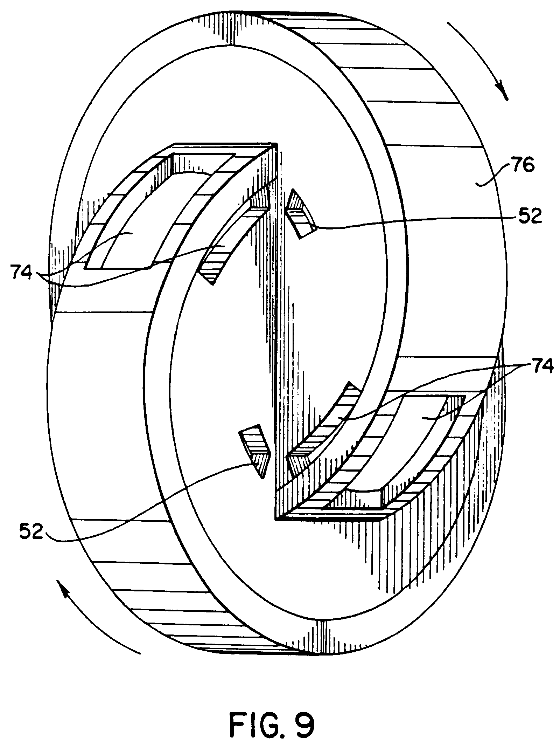

The thermodynamic cycle of the engine 10 consists of four separate and distinct phases: intake, compression, hyper-expansion, exhaust. Figures 5-8 show how each of the cycles is achieved by the interaction of the intake/compression vanes 18 with the expansion/exhaust vanes 22. Figure 9 shows placement of intake ports 52 and exhaust ports 74 on engine block 76.

INTAKE

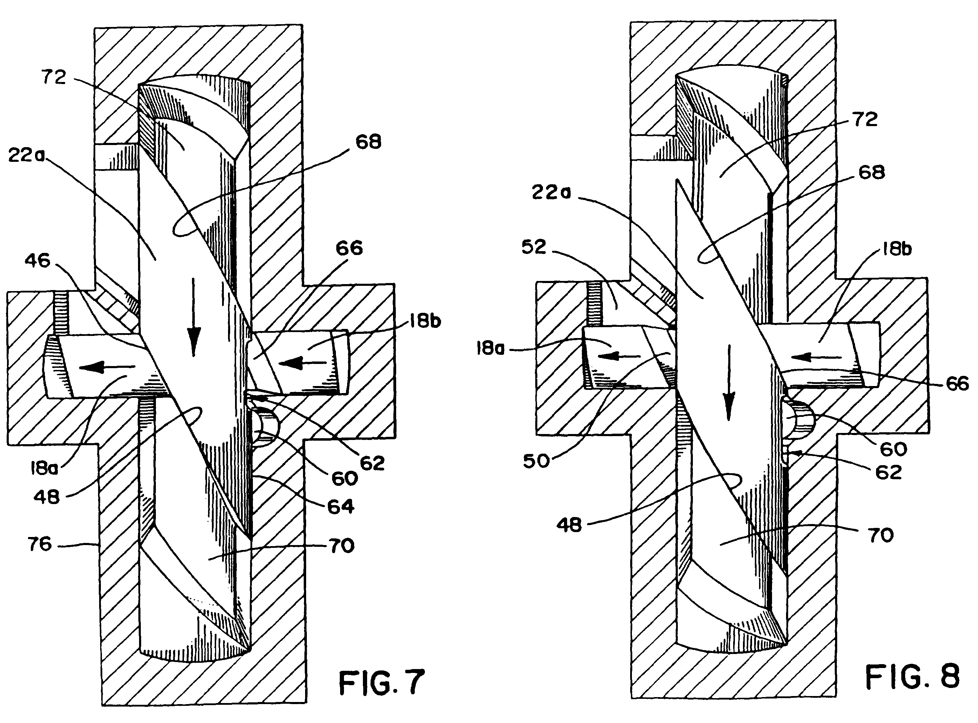

Figure 7 shows trailing edge 46 of intake/compression vane 18a in complete engagement with leading edge 48 of expansion/exhaust vane 22a. Figure 8 shows the beginning of formation of an intake chamber 50 as the intake/compression vane 18a begins to disengage the expansion/exhaust vane 22a. The intake chamber 50 communicates with intake port 52, which supplies the intake chamber 50 with a working fluid, due to the partial vacuum created as the intake chamber 50 continues to get larger, as shown in Figure 5. By Figure 6, the intake chamber 50 has reached full volume.

The intake volume of each intake chamber 50 is dependent on the number of chambers per rotor 12 and 14. The number of chambers 50 for each rotor 12 and 14 must be equal. The volumetric efficiency of the chambers 50 is very high, due to the substantial amount of intake duration which is provided. Approximately 75 percent of the cycle time can be used for intake for each chamber. A conventional reciprocating engine allows around thirty percent of the cycle time to fill its cylinders. Also, both rotors 12 and 14 can share a common intake port 52 into the engine 12, which makes the need for complicated manifolds unnecessary. This results in a very uniform distribution of air to each chamber 50 of each rotor 12 and 14. The chambers 50 are filled through ports 52, so there is no need for valves and their associated hardware.

COMPRESSION

Figure 5 shows leading edge 54 of expansion/exhaust vane 22b just prior to engaging trailing edge 56 of intake/compression vane 18b and the beginning of formation of compression chamber 58. The working fluid is compressed as the volume of compression chamber 58 gets smaller, as shown in Figure 6. Figure 7 shows the partially compressed working fluid being transferred to combustion chamber 60 via passage 62 in side 64 of the expansion/exhaust vane 22a. In Figure 8, the working fluid is compressed into the combustion chamber 60 and passage 62. At this point, combustion takes place. Combustion can be initiated either from some outside ignition or by compression ignition as in the Diesel cycle.

The compression stroke provides an inherent means to generate turbulence within the air-fuel mixture. Turbulence is a desired characteristic during the combustion process. The air-fuel mixture is compressed into a clearance volume to provide a suitable compression ratio. Due to the shape of the vanes 18 and 22 and the location of the clearance volume, which is also the combustion chamber, the gas will undergo a number of directional changes, which induce turbulence.

HYPER-EXPANSION

In Figure 8, leading edge 66 of intake/compression vane 18b is in full engagement with trailing edge 68 of the expansion/exhaust vane 22a. The vanes 18b and 22a will remain in full engagement for some time as hyper-expansion chamber 70 is formed, as shown in Figure 5. The hyper-expansion chamber 70 continues to grow through Figures 6 and 7, until reaching its full volume in Figure 8.

It was mentioned earlier that the gases which are heated by combustion are allowed to expand into a volume which is substantially larger than the original intake volume. They do so in approximately 25 percent of the cycle time. A conventional engine allows the gases to expand in approximately 20 percent of the cycle time. Although this appears to be better at first, because heat loss is dependent on time, it should be considered that the conventional engine is only allowing the gases to expand into the original intake volume. The engine 10 allows the expansion of the gases into the original intake volume in eight percent of the cycle time and 3.5 times the intake volume in 25 percent of the time.

EXHAUST

In Figure 7, the leading edge 66 of the intake/compression vane 18b is just beginning engagement with the trailing edge 68 of expansion/exhaust vane 22a to begin reduction in volume of exhaust chamber 72, as shown in Figure 8. The exhaust chamber 72 continues to shrink in volume, Figures 5 and 6, thereby forcing the exhaust fluid through exhaust port 74.

Due to the overlap in thermodynamic phases within the engine 10, the exhaust gases can remain inside the engine for up to 75 percent of the cycle time, or they can be brought to atmospheric pressure immediately following the hyper-expansion phase. Due to the sufficient amount of expansion, the gases can approach temperatures which are 1000° Fahrenheit cooler than those of a conventional reciprocating engine. This lowered temperature and accordingly, pressure, will also lower the amount of potential noise generated by the exhaust process. By being able to contain the exhaust gas for an extended period of time, it is possible to use the exhaust gas to aid sealing and/or any potential thermal requirements of the engine 10. For example, they could be used to provide at least part of the necessary heat required to begin the combustion process and do away with a conventional ignition system. Because of the reduced exhaust temperatures, it may be possible to operate the engine 10 without a cooling system.

FUEL DELIVERY

Because the engine 10 is rotary in nature and because of the extended intake duration, if carbureted, the centrifugal forces would tend to separate the fuel from the air and would result in poor mixture quality. The better solution is to use direct fuel injection. Although direct injection requires higher injection pressures to overcome the gas pressures during the compression phase, better results can be achieved over indirect fuel injection. One of the pitfalls for direct injection is that the tip of the injector is directly exposed to the heat of combustion, which can reach temperatures of 5000° Fahrenheit. This tends to erode the tip of the injectors and sacrifice their longevity. The engine 10 (when not utilizing Diesel cycles) is such that it will allow direct injection during the compression phase and then mask the tip of the injector during the combustion process with the intake vanes 18 and prevent the typical high temperature erosion of the injectors. Also, the intake vanes 18 could also act as timing devices to control the injectors. The injectors can therefore be of the constant flow type without a need for complicated timing controls. The delivery rate could be simply controlled by varying the pressure and/or flow rate of the fuel pump.

IGNITION

There are two combustion chambers; one for each rotor. This also means that there are two ignition points. The ignition could be done with conventional spark plugs and timing devices; however, at the proposed mechanical design limit for the current version of 25,000 RPM and four intake and four exhaust chambers per rotor, this translates to 100,000 ignition events per rotor per minute. This may require the development of alternative ignition approaches, such as use of the heat in the exhaust gases or a laser ignition.

## LUBRICATION

Lubrication could be provided with fuel as in two cycle engines or with an external pressurized supply, such as an oil pump. An interesting phenomenon that can be utilized for lubrication is that the arrangement and interaction of the rotors 12 and 14 makes for a recycling centrifugal pump. If oil is introduced towards the center of one rotor, it will be thrown to the outside of that rotor by centrifugal force, as indicated by the arrows 78 in Figure 1. Because the outside of one rotor interacts with the inside of the other rotor, the oil will then be transferred to the inside of the other rotor, as indicated by arrows 80, where it will then be thrown to the outside of that rotor and picked up by the inside of the original rotor and recycled through the same chain of events.

## THERMODYNAMICS

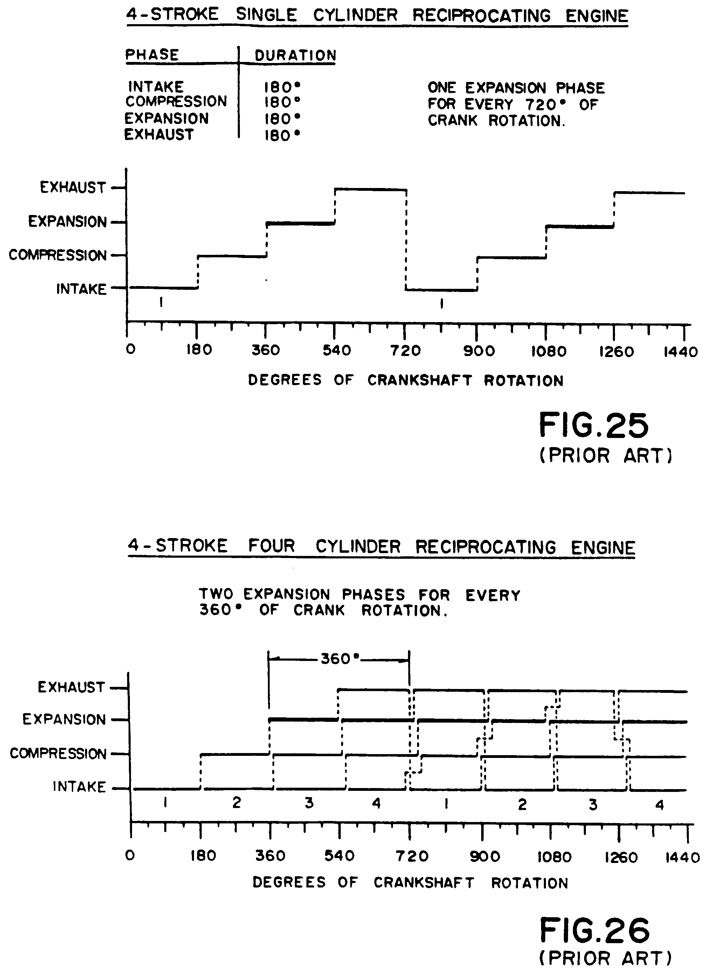

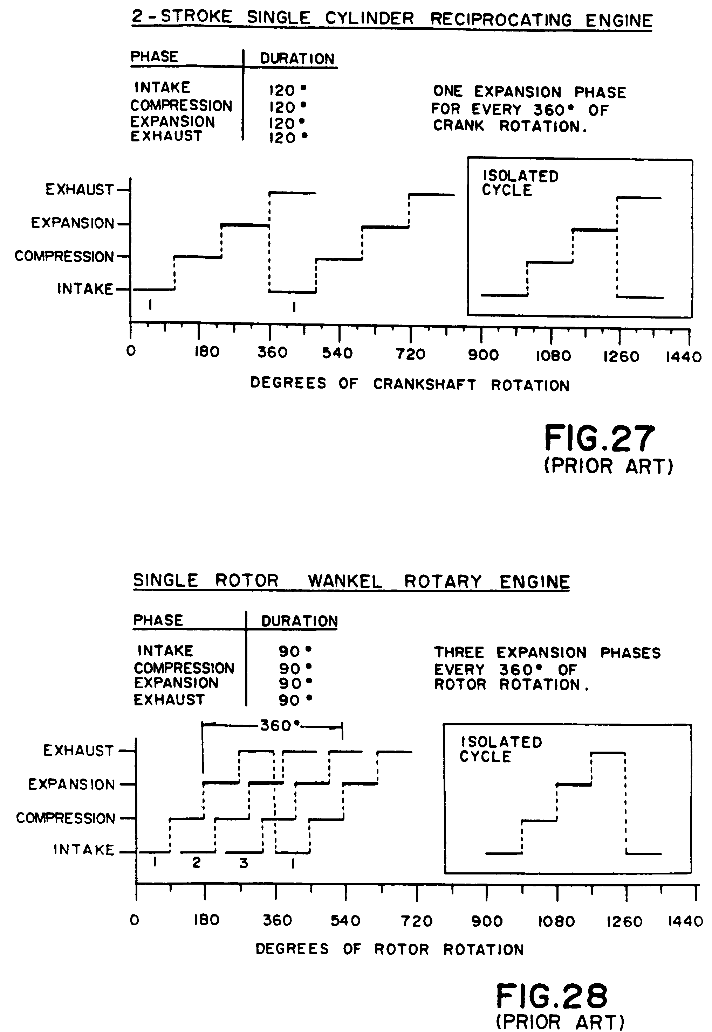

The following calculations in Tables I-XI comparing a conventional four-stroke reciprocating engine and the rotary engine 10 are based on the fuel-air-cycle approximation as described in A.R. Rogowski, Elements of Internal Combustion Engines, McGraw-Hill, 1953, pp. 57-65. The calculations assume a frictionless adiabatic process and rely upon two charts of thermodynamic properties: Figure 26, page 59 and Figure 27, a separate sheet enclosed with the book.

### Listing of Variables

P(n) =    Pressure at pertinent stage of cycle (psia)
T(n) =    Temperature at pertinent stage of cycle (degrees Rankine)
V(n) =    Volume of fuel-air mixture at pertinent stage of cycle (cubic feet)
r =    Compression ratio
Es(n)=    Internal sensible energy at pertinent stage of cycle (Btu)
Ec =    Chemical energy (Btu)
E =    Total internal energy = Es + Ec (Btu)
f =    wt. of residual gas/total wt. of chart contents

Other variables are described as they are used in the remainder of this document.

TABLE I

| INITIAL CONDITIONS AT END OF INTAKE OF FRESH AIR & FUEL | |
|---|---|
| CONVENTIONAL | PROPOSED |
| P1 = 14.7 psia | P1 = 14.7 psia |
| T1 = 540 R | T1 = 540 R |
| V1 = 13.8 cubic ft. | V1 = 13.8 cubic ft. |
| r = 10 | r = 10 |
| Esl = 8 Btu | Esl= 8 BTU |

## TABLE II

## CONDITIONS AT END OF COMPRESSION STROKE

Residual gas (f) = T1/2500r = 540/2500(10)= 0.0216

The chemical energy (Ec) prior to combustion:

$$Ec = (1-f)1507 + 300f$$
$$Ec = (1 = 0.0216)1507 + 300(0.0216) = 1481 \text{ Btu}$$

| CONVENTIONAL | PROPOSED |
|---|---|
| P2 = 310 psia | P2 = 310 psia |
| T2 = 1160 R | T2= 1160 R |
| V2 = V1/r = 1.38 cubic ft. | V2 = V1/r = 1.38 cubic ft. |
| Es2 = 142 Btu | Es2 = 142 Btu |
| Ec = 1481 Btu | Ec = 1481 Btu |
| E2 = Es2 + Ec = 1623 Btu | E2 = Es2 + Ec = 1623 Btu |

TABLE III

| ADDITION OF HEAT DUE TO COMBUSTION | |
|---|---|
| CONVENTIONAL | PROPOSED |
| P3 = 1575 psia | P3 = 1575 psia |
| T3 = 5150 R | T3 = 5150 R |
| V3 = 1.38 cubic ft. | V3 = 1.38 cubic ft. |
| E3 = 1623 Btu | E3 = 1623 Btu |

TABLE IV

| EXPANSION OF HEATED GASES | |
|---|---|
| CONVENTIONAL | PROPOSED |
| P4 = 90 psia | P4 = 18.5 psia |
| T4 = 2975 R | T4 = 2100 R |
| V4 = 13.8 cubic ft. | V4 = 48.3 cubic ft. |
| E4 = 915Btu | E4 = 672 Btu |

TABLE V

| WORK PER CYCLE | |
|---|---|
| (E3 - E4) - (Es2 - Esl) = Btu | |
| CONVENTIONAL | PROPOSED |
| (1623-915)-(142-8) = 574 Btu | (1623-672) -(142-8) = 817Btu |

TABLE VI

| ENERGY INPUT | |
|---|---|
| (Fuel wt.) (Heating value) = (1-f)F X 19,270 = Btu | |
| CONVENTIONAL | PROPOSED |
| (1-0.0216)1507 X 19,270 = 1474 Btu | (1-0.0216)1507 x 19,270 = 1474 Btu |

TABLE VII

| INDICATED THERMAL EFFICIENCY | |
|---|---|
| work output / heat input | |
| CONVENTIONAL | PROPOSED |
| 574 Btu / 1474 Btu = 0.39 | 817 Btu / 1474 Btu = 0.55 |

TABLE VIII

| INDICATED MEAN EFFECTIVE PRESSURE | |
|---|---|
| MEP = (work per cycle) (J) / Vd | |
| J = 778 ft-lb per Btu | |
| $Vd = (V1 - V2) (144\ in^2\ per\ ft^2)$ | |
| Vd = (13.8 - 1.38) (144) = 1788.5 | |
| CONVENTIONAL | PROPOSED |
| (574 Btu) (778)/1788.5 = 250 psia | (817 Btu) (778)/1788.5 = 355 psia |

TABLE IX

| The following calculations are for conventional and proposed 8 cylinder engines each displacing a total volume of 3.05 cubic inches (50cc). | |
|---|---|
| HORSEPOWER | |
| $HP = \dfrac{(MEP)\ (Vd)\ (n)}{(33,000)\ (12)}$ | |
| Vd = Total Displacement / no. of Cylinders | |
| $Vd = 3.05\ in^3 / 8 = 0.3814\ in^3$ | |
| CONVENTIONAL | PROPOSED |
| n = (no. of cylinders) (RPM)/2<br>n = 8 x 25,000 / 2 = 100,000<br>$HP = \dfrac{(250)\ (0.3814)\ (100,000)}{(33,000)\ (12)}$<br>HP = 24.1 | n = (no. of cylinders) (RPM)<br>n = 8 x 25,000 = 200,000<br>$HP = \dfrac{(355)\ (0.3814)\ 200,000)}{(33,000)\ (12)}$<br>HP = 68.4 |

TABLE X

| INDICATED SPECIFIC FUEL CONSUMPTION | |
|---|---|
| isfc = 2545 / (ec) (ni) = lb of fuel per HP-hr | |
| ec = chemical energy per lb. of fuel=19,000 Btu | |
| ni = indicated thermal efficiency (calculated in Table VII) | |
| CONVENTIONAL | PROPOSED |
| isfc= 2545/(19,000) (0.39)<br>isfc= 0.34 lb of fuel per HP-hr | isfc=2545/(19,000) (0.55)<br>isfc = 0.24 lb of fuel per HP-hr |

TABLE XI

| MILES PER GALLON | |
| --- | --- |
| Assume an imaginary vehicle is going to travel 60 miles per hour for one hour and due to rolling resistance and air resistance requires 20 horsepower to travel 60 miles per hour. | |
| Lbs. of fuel required = (isfc) (HP) (hrs) | |
| $\text{Gallons of fuel} = \dfrac{\text{Lbs. of fuel required}}{\text{6 Lbs. per gallon of fuel}}$ | |
| MPG = Distance traveled / gallons of fuel | |
| CONVENTIONAL | PROPOSED |
| Lbs. of fuel = (0.34) (20) (1) = 6.8<br>Gallons of fuel = 6.8/6 = 1.13<br>MPG = 60 mi./1.13 Gals = 53 MPG | Lbs. of fuel = (0.24) (20) (1) = 4.8<br>Gallons of fuel = 4.8 / 6 = 0.8<br>MPG = 60 mi./0.8 = 75 MPG |

OTHER FACTORS TO CONSIDER

In order for the conventional engine to power the imaginary vehicle, it would have to spin very close to its ultimate RPM of 25,000 in order to produce the 20HP required to propel the vehicle at 60 MPH. This would warrant a strong concern for the reliability of the conventional engine. On the other hand, the proposed engine would need to spin approximately 7500 RPM in order to produce the 20 HP required to propel the vehicle at 60 MPH. This is a reasonable RPM and as a result, reliability would also be improved.

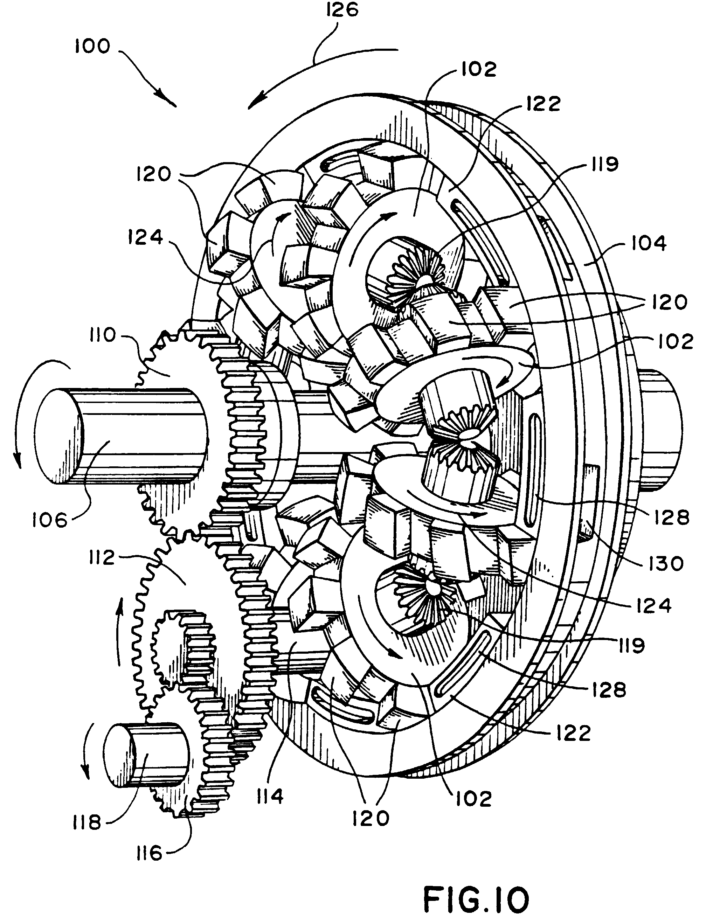

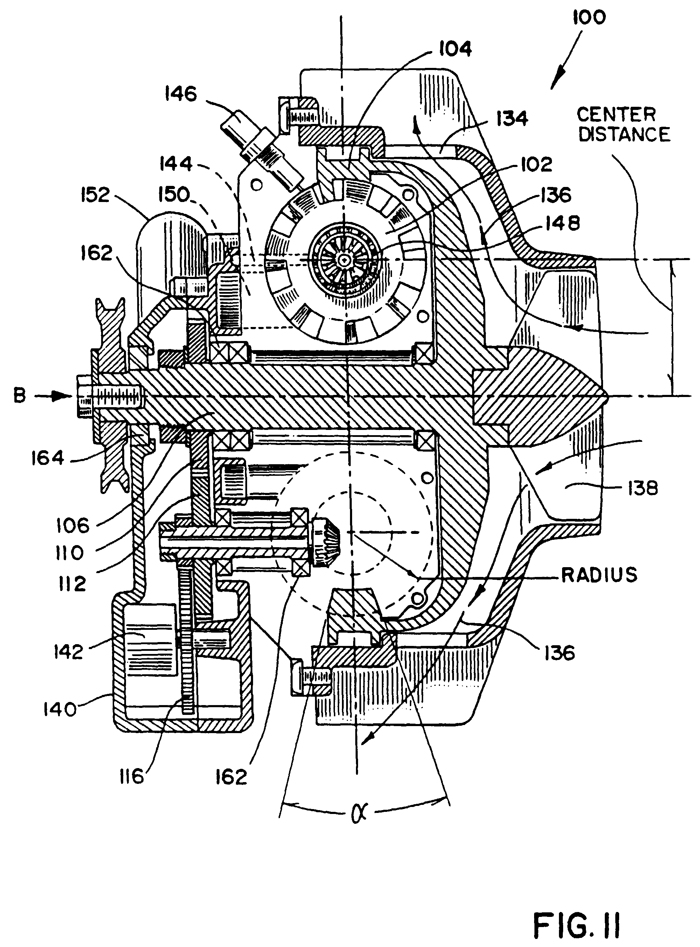

Figures 10-13 show another form of an engine 100 of the invention. Figure 10 shows the principal mechanical components of the engine 100. Eight compressor rotors 102 interact with one expansion rotor 104. Attached to the expansion rotor 104 is a main drive shaft 106 which is provided with bearings 162 (Figure 11) and a gear 110 engaging gear 112 of compressor drive shaft 114. Gear 112 engages gear 116, which in turn drives an oil pump drive shaft 118. The compressor rotors are connected together by means of gears 119. Each of the compressor rotors 102 has a plurality of intake/compression vanes 120. The expansion rotor 104 has a plurality of expansion/exhaust vanes 122 around its inside, which intermesh with the vanes 120 as the rotors 102 and 104 rotate in the directions indicated by the arrows 124 and 126, respectively. Each of the vanes 122 has a transfer passage 128, the function of which will be explained below, terminating in an exhaust port 130.

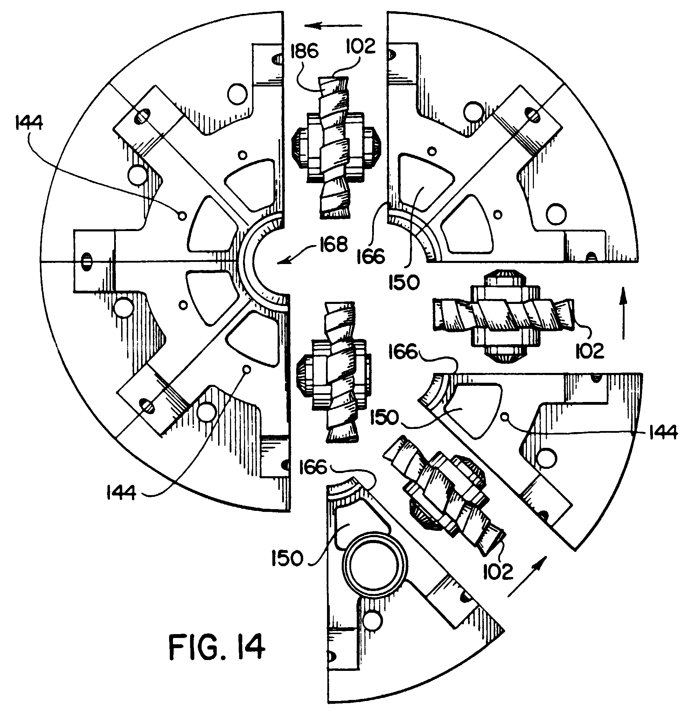

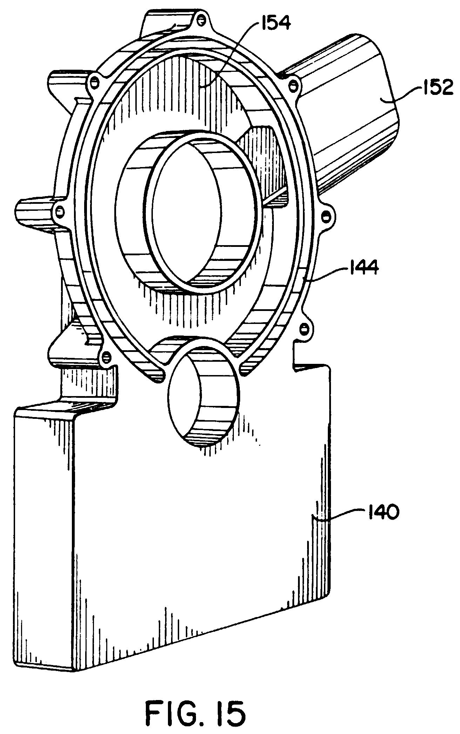

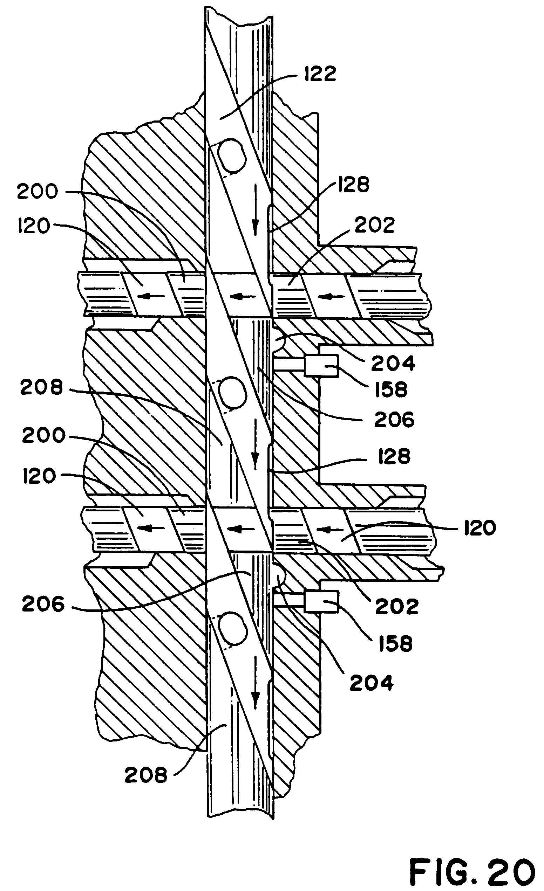

Figures 11-13 show additional details of the engine 100. These views show the engine 100 assembly in elevation and partial cross-section and in external perspective. The portion of the engine 100 shown in Figure 10 is enclosed in a block 132, which interacts with the rotors 102 and the rotor 104 as they rotate to form working chambers dynamically, which roughly corresponding to cylinders in a conventional piston engine. The block 132 has a cooling duct 134, through which air 136, driven by cooling fan 138 attached to the main drive shaft 106, passes to cool the engine 100. Cooling fins 139 on the block 132 assist in the cooling. A gear housing and oil sump 140 is attached to the block 132 to enclose gears 110, 112 and 116 and oil pump 142. The oil pump 142 is connected to lubrication channels 144 (see also Figures 14 and 15) throughout the block 132 to supply oil to the moving parts of the engine. The first rotors 102 include oil return passages 145 to facilitate return of the oil to the oil sump 140. A fuel injector 146 is provided for each of the rotors 102 at locations 147 on the block 132. The rotors 102 are supported in bearings 148. An intake port 150 is provided for each of the rotors 102. An intake duct 152 on the block 132 provides air to the intake ports 150 through intake manifold 154. An exhaust port 156 through the block 132 receives exhaust gases from exhaust ports 130 in the vanes 122. Ignition devices 158 (see Figures 20-24) are provided between each of the first rotors 102 and the second rotor 104 at locations 160. The main drive shaft 106 is supported by bearings 162 and has an oil seal 164 where it passes through block 132.

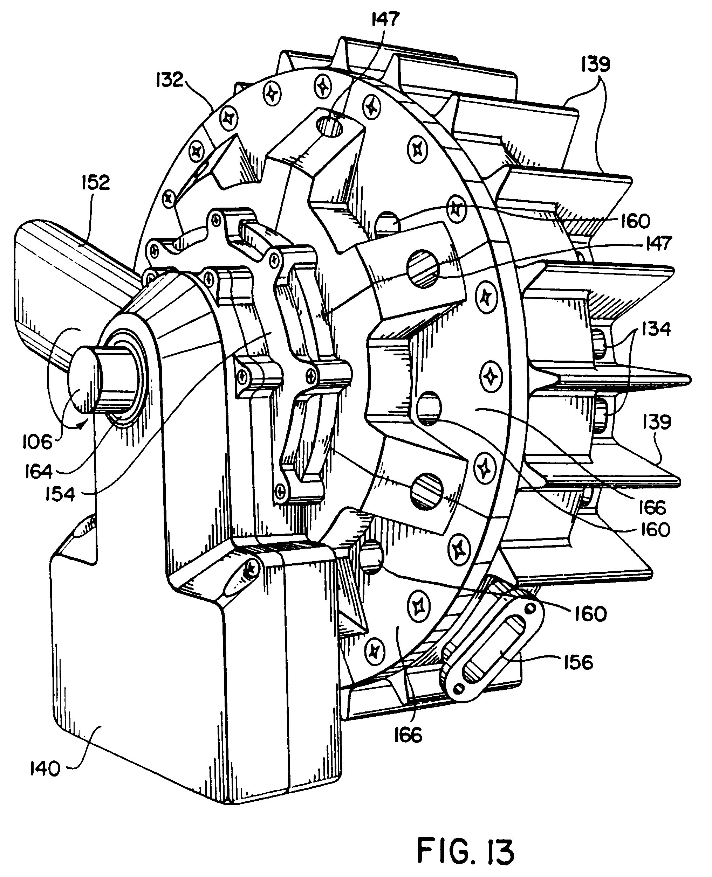

Figures 13 and 14 show details of the block 132 and its method of assembly. The block 132 is formed from a plurality of wedge-shaped sectors 166. Two block sectors 166 are joined together to encapsulate a compressor rotor 102. The sectors 166 are joined together in such a sequence so as to result in semi-circular assemblies 168. These two assemblies 168 are then joined together along with the remaining two compressor rotors 102 to form the engine block 132. Also shown in Figure 14 are intake ports 170 on the sectors 166.

Figure 15 shows details of the intake manifold 154 and oil sump 140 with oil distribution channel 144 and intake duct 152.

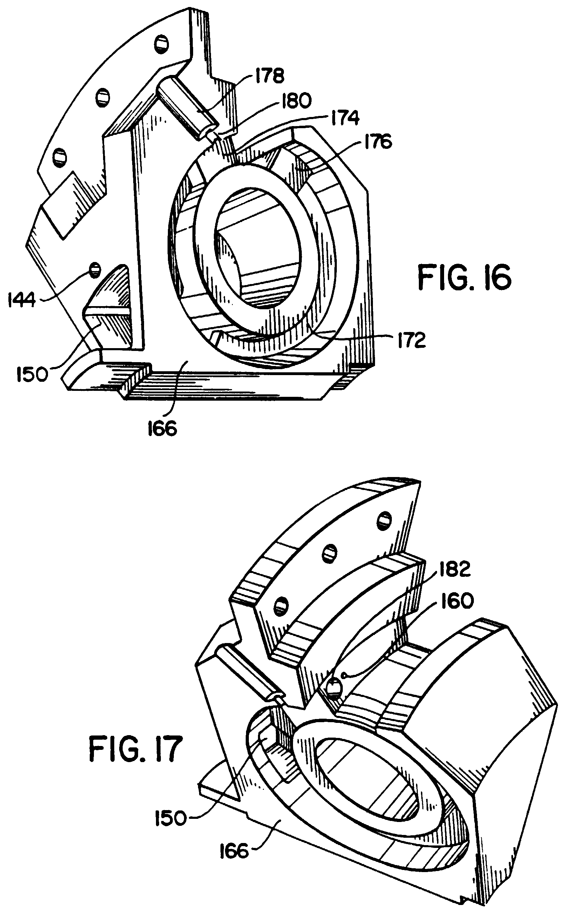

Figures 16 and 17 give further details of the sectors 166, showing an intake port 170, intake passageway 172 connected to the intake port 170, compression phase and expansion phase sealing areas 174 and 176, fuel injector 146 location 178 and orifice 180 and lubrication channel 144. Also shown are the location of combustion chamber 182 and location 160 of ignition device 158.

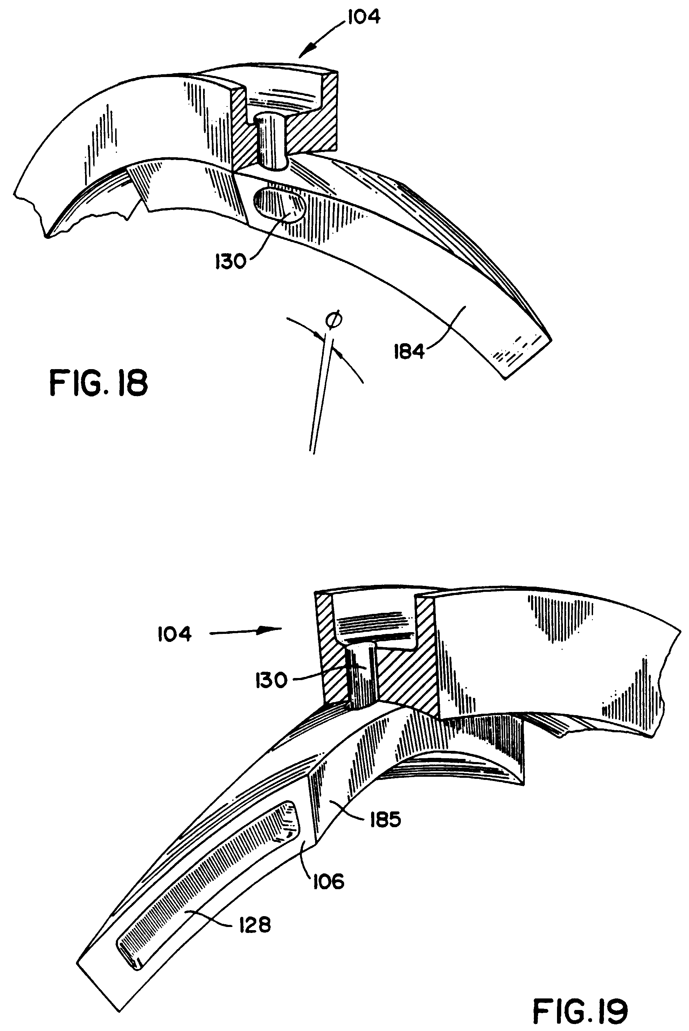

Figures 18 and 19 give further details of the expansion rotor 104, showing exhaust port 130 and meshing surfaces 184 and 185, which engage surfaces 186 (Figure 14) of the compressor rotors 102 in operation of the engine 100. Also shown is transfer passage 128.

Like the toroidal hyper-expansion rotary engine 10 of Figures 1-9, the multi-compressor hyper-expansion engine 100 of Figures 10-19 is also a positive displacement engine which consists of two or more rotors 102 or 104 oriented to provide sufficient changes in volume to allow a cyclic pumping action to take place which enables the intake, compression, hyper-expansion and exhaust of a working fluid. By the addition of heat into the cycle, the engine is able to produce work. As Figures 5-8 describe the sequence of events for the pumping action of the toroidal hyper-expansion engine 10, Figures 20-24 show the similarities of the pumping action of the multi-compressor hyper-expansion engine 100. One difference between the two actions is that the exhaust phase of the multi-compressor hyper-expansion engine 100 uses exhaust ports 130 within the expansion/exhaust vanes 122 whereas the toroidal hyper-expansion rotary engine does not.

It should be pointed out that both engines are toroidal hyper-expansion rotary engines and operate on the same concepts; however, the differences between the two are in the mechanical arrangements of their rotors. The toroidal hyper-expansion engine 10 has its rotors 12 and 14 linked like the links of a chain. The multi-compressor hyper-expansion engine 100 does not require a linking together of its rotors 102 and 104. Whereas the rotors 12 and 14 of the toroidal hyper-expansion engine each provided for the attachment of intake/compression vanes 18 and expansion/exhaust vanes 22, the rotors 102 and 104 of the multi-compressor hyper-expansion engine 100 each have only one type of vane. For simplicity's sake, the intake/compression vanes 120 shall now be referred to as compression vanes 120 and the expansion/exhaust vanes 122 shall be referred to as expansion vanes 122. The rotors 102 of the multi-compressor hyper-expansion engine which have compression vanes 120 are called the compressors 102. The one rotor 104 of the multi-compressor hyper-expansion engine 100 with expansion vanes 122 is called the expansion rotor 104. The expansion ratio remains the same at 3.5 : 1; therefore, the same thermodynamic relationships and efficiencies exist as in the toroidal hyper-expansion engine and as illustrated by TABLES I-XI.

The multi-compressor hyper-expansion engine 100 is a positive displacement internal combustion engine whose pumping action is achieved through concentric rotary motion of its moving parts and which allows the expansion volume of the heated air to be greater than the original intake volume, thus providing many benefits, including increased thermal efficiency. The overall design of the engine 100 is very flexible, therefore allowing for the addition of other features deemed necessary to improve its operation or reliability. The current expansion volume is three and one-half times as great as the intake volume, but this expansion volume can be made greater or lesser depending on the design requirements. By allowing the heated air to expand into a large volume, the final temperatures and pressure at the end of the cycle can be substantially lowered. The number of moving parts required for the engine 100 (disregarding ancillaries) to achieve its pumping action and power output is ten. Of these, six are identical, with the seventh and eighth parts almost identical except for minor details. This is a noteworthy feature as far as the manufacture of the engine.

The exhaust temperatures are approximately nine-hundred degrees Fahrenheit lower than those of typical positive displacement engines. This shows that a greater proportion of the heat energy available is actually being utilized to provide mechanical work. This leaves much less heat energy available to heat up engine components, so it is anticipated that the proposed engine will require a minimal cooling system. Air cooling is the cheapest and simplest, but water cooling is typically more stable. Either can be incorporated into the engine's design. Reduced exhaust temperature is also directly related to reduced exhaust pressure. This aspect, combined with few moving parts, all of which are rotary, give a very quiet operating engine, thus muffling and sound deadening requirements can also be reduced with a corresponding savings in weight.

The moving parts of the engine 100 consist of one expansion rotor 104, eight compressors 102 and one compressor drive shaft 114 as shown in Figure 10. The expansion rotor 104 is supplied with a main shaft 106 supported in rolling element bearings 162, although, depending on required operational speeds, plain bearings could be used as well. The compressors 102 are independent rotors which are geared together by gears 119 and which are also supported via shafts and rolling element or plain bearings 148. The compressor drive shaft 114 is geared directly to the main shaft 106 of the expansion rotor 104 with a gear ratio of 1:1 and is supported by rolling element or plain bearings 162 as well. The gear ratio need not be confined to 1:1; however, the gear ratio does impact the geometry of the compressors 102 and expansion vanes 122 with a direct effect upon the efficiency and power output of the engine 100. The other end of the compressor drive shaft 114 is geared to one of the compressors 102 which are in turn geared together. The compressor drive shaft 114 is also used to drive an oil pump 142 which can supply pressurized lubricant to all of the gears and bearings of the engine unit. The main drive shaft 106 mates with an appropriate transmission or coupling device and is provided with an accessory drive pulley if needed.

The expansion rotor 104 and the compressors 102 carry eight vanes 122 and 120 each. It is the interaction of the vanes 120 of the compressors 102 with the vanes 122 of the expansion rotor 104 which create the necessary changes in volume required for there to be a pumping action. The compressors 102 are arranged such that their spin axis is in an orthogonal plane to that of the spin axis of the expansion rotor. The compressors 102 are also radially oriented about the spin axis of the expansion rotor 104, so that each expansion vane 122 interacts with one compression vane 120 of each compressor 102 as the rotors 102 and 104 rotate through one complete revolution. The number of individual cycles completed for each revolution of the engine 100 is equal to the number of vanes 120 or 122 times the number of compressors 102. In this case, eight vanes 120 or 122 times eight compressors 102 equals sixty-four completed thermodynamic cycles per revolution of the expansion rotor 104. The engine 100 can be designed with any number of compressors 102 within the geometric limits imposed by the expansion rotor 104. It is possible to vary the displacement of the engine 100 either by changing the dimensions of the compressors 102 or by changing the number of compressors utilized. The number of compression vanes 120 per compressor 102 must be equal to (1 / GEAR RATIO) * (the number of expansion vanes 122 used on the expansion rotor 104) where the GEAR RATIO = revolutions of a compressor 102 per revolution of the expansion rotor 104. The best thermal efficiencies will be achieved when the number of vanes 122 used on the expansion rotor 104 is equal to or greater than the number of compressors 102. If the number of vanes 122 is less than the number of compressors 102, then the expansion ratio is reduced, due to the way the cycles of each individual set of vanes and chambers are overlapped.

The stages of the thermodynamic cycle in the engine 100 are: Intake, Compression, Hyper-Expansion, Exhaust. Like positive displacement pumps, the pumping action is achieved through volumetric changes and occurs sequentially but at different locations. This arrangement provides for increased design flexibility for optimizing each phase of the cycle.

The four phases of the thermodynamic cycle are accomplished by a pumping action produced by the interaction of the compression vanes 120 and chambers of the compressors 102 with the expansion vanes 122 and chambers of the expansion rotor 104. The necessary pumping action is described as follows, with reference to Figures 20-24:

INTAKE:

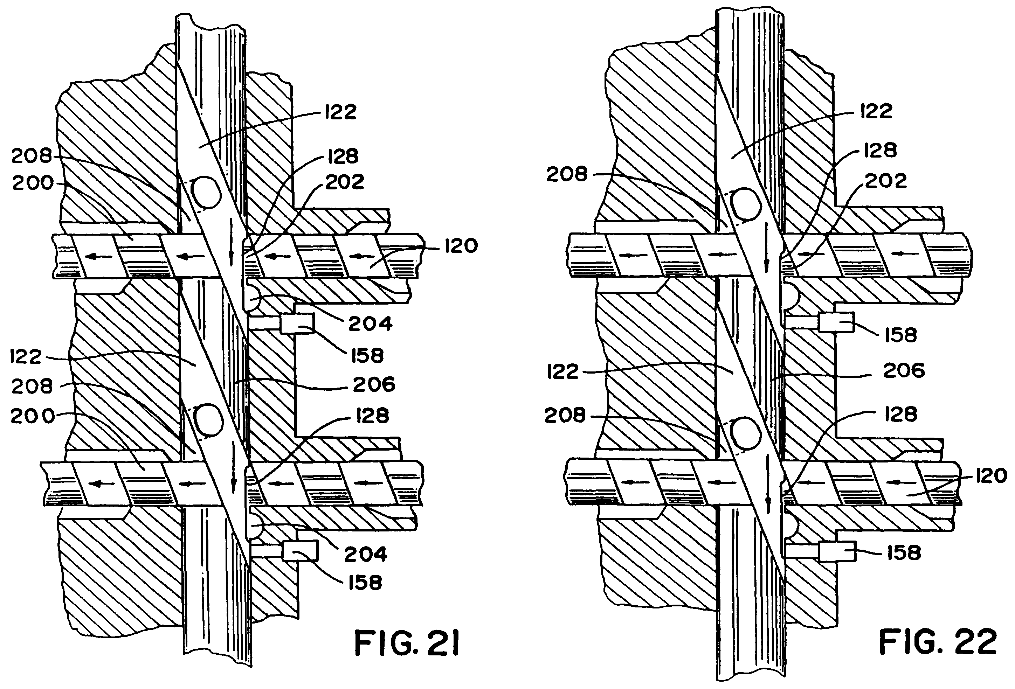

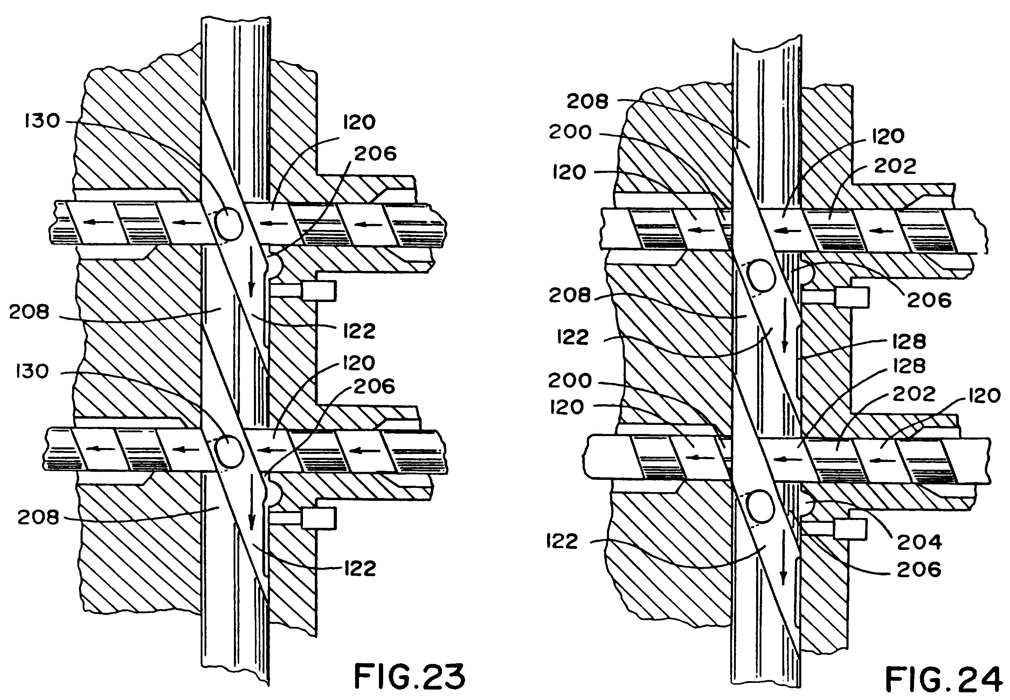

Figure 24 shows the beginning of the formation of an intake chamber 200 as a compression vane 120 moves away from an expansion vane 122. The volume of the intake chamber 200 increases as shown by Figure 20 until it reaches its maximum value in Figure 21.

COMPRESSION:

Figure 24 shows a compression chamber 202 just at the beginning point of compression. The compression volume is reduced by the movement of a compression vane 120 towards an expansion vane 122. The reduction in volume is shown by Figures 20, 21 and 22. The contents of the compression chamber are compressed into the combustion chamber via the transfer passage 128 located on the side of the expansion vanes. As shown by Figure 22, the transfer passage 128 also unmasks the ignition device 158. The transfer passage 128 is in direct communication with combustion chamber 204 (See Figure 21) so that the compressed mixture, which has been ignited by the ignition device 158 within the transfer passage 128, continues the burning of the compressed mixture within the combustion chamber 204.

HYPER-EXPANSION:

Figure 23 shows the formation of an expansion chamber 206 as an expansion vane 122 moves away from a compression vane 120. The expansion chamber 206 continues to grow through Figures 24, 20, 21, and 22. This is the area where the burning gases exert a force upon the expansion vane 122 and drive the expansion rotor 104 around.

EXHAUST:

Figure 23 also shows the initiation of the exhaust phase. The exhaust gases are allowed to escape through the exhaust port 130 of the expansion vane as the port 130 becomes exposed and as the volume of exhaust chamber 208 is reduced by the movement of the expansion vane 122 toward the compression vane 120 as shown by Figures 24, 20, 21 and 22.

Figures 25 through 32 show a comparison of the respective cycles for common prior art engines with the present engines 10 and 100. It is the expansion phase of the cycles of all of the engines which is responsible for performing work upon the engine. Figure 25 maps the phases of the cycle of a single cylinder four-stroke reciprocating engine. It shows that for every 720 degrees of crankshaft rotation (two full revolutions) there is only one expansion phase. If we add another cylinder to the engine then, regardless of how the movements of the pistons are phased with respect to one another, there will be two expansion phases for every 720 degrees of crankshaft rotation. Figure 26 shows that a four cylinder four-stroke reciprocating engine can provide up to four expansion phases per 720 degrees of crankshaft rotation. The smoothest power output will be when the cycles are 180 degrees out of phase with respect to each other. This would produce an expansion phase for every 180 degrees of crankshaft rotation.

Figure 27 maps the cycle of a single two-stroke reciprocating engine. It shows there to be an overlapping of the phases with an expansion phase every 360 degrees of crankshaft rotation. With the addition of a second cylinder, the two-stroke engine is capable of producing an expansion phase every 180 degrees of crank rotation; the same as a four cylinder, four-stroke reciprocating engine. This is possible because the total amount of duration for a two-stroke engine to complete one cycle is 360 degrees as opposed to 720 degrees for the four-stroke. The two-stroke engine accomplishes this by overlapping the phases of its cycle.

The cycle of the Wankel engine is shown in Figure 28. A single rotor Wankel engine produces three expansion phases for every 360 degrees of its rotor's rotation. In order to fairly represent the cycle of the Wankel engine, it was necessary to show its cycle times with respect to the rotation of its rotor rather than the rotation of its output shaft. This eliminates the effects of the gear ratios required between the output shaft and the rotor itself.

Although in actual practice the durations of the phases of each of the cycles varies, each phase of the three above respective cycles was depicted as consuming the same amount of duration. In other words, the intake, compression, expansion and exhaust phases required 180 degrees each for the four-stroke engine, 120 degrees each for the two-stroke engine and 90 degrees each for the Wankel engine.

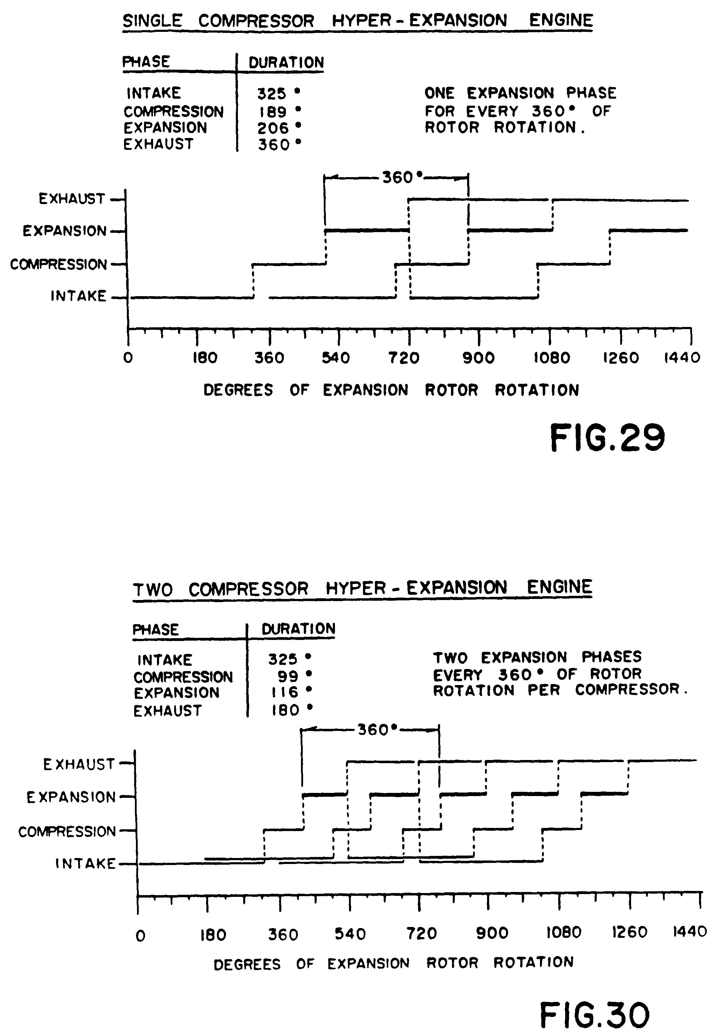

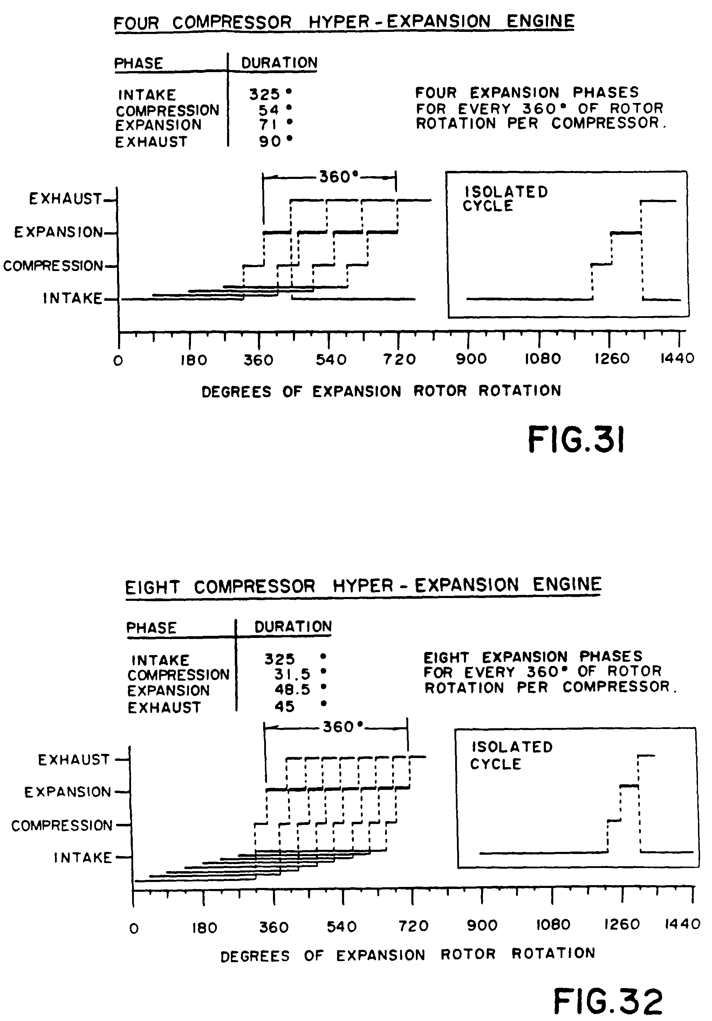

The cycle of the proposed engine is much akin to the cycle of the two-stroke reciprocating engine except that the duration of each of the phases is not equal, and the possible extent of variation in duration is substantially larger. Figures 29 through 32 illustrate the cycles for single compressor, two compressor, four compressor and eight compressor hyper-expansion engines respectively. By comparing the isolated cycle of Figure 27 with the isolated cycles of Figures 31 and 32, it can be seen how the cycle of the proposed engine is much like that of the two-stroke reciprocating engine; however, it is also plainly evident that the proportionality of the durations of the phases of the proposed engine as well as the total duration required per complete cycle are significantly different from those of any of the above mentioned engines.

The approximate durations for each of the phases of the cycle of the hyper-expansion engine are with respect to the expansion rotor and can be calculated as follows:

INTAKE DURATION (degrees) = $(360 - \alpha)$/GEAR RATIO.
COMPRESSION DURATION (degrees) = $(\gamma + \beta)$/GEAR RATIO.
EXPANSION DURATION (degrees) = $(\alpha - \beta + \theta)$.
EXHAUST DURATION (degrees) = $\delta$.

where:

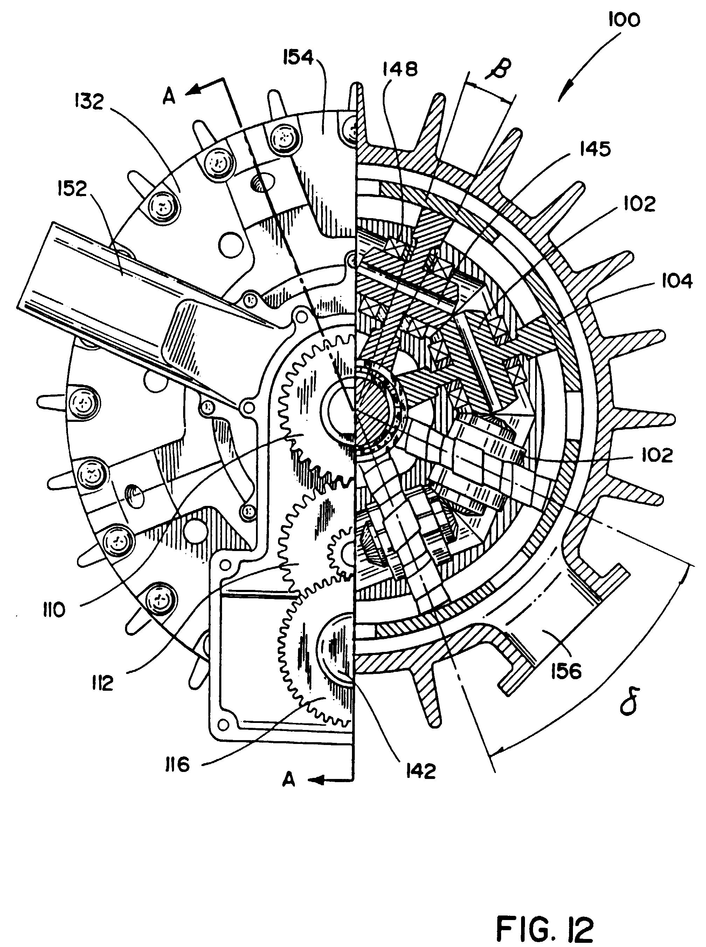

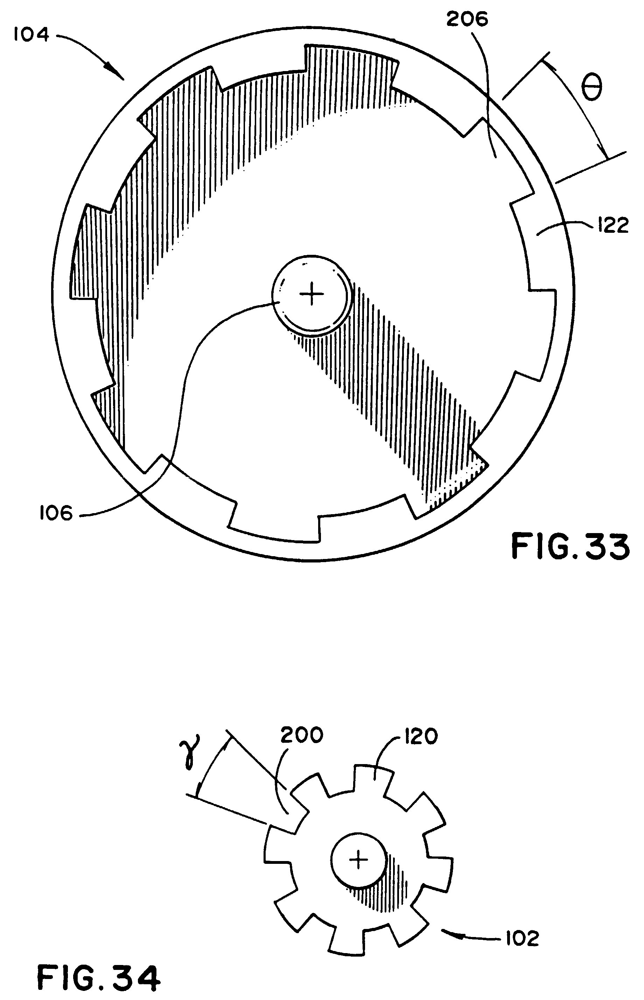

$\alpha$ = The included angle of the end of an expansion vane as measured from the axis of rotation of a compressor (Figure 11).
$\beta$ = The included angle of the end of a compression vane as measured from the axis of rotation of expansion rotor (Figure 12).
$\gamma$ = The included angle of the side of an intake chamber as measured from the axis of rotation of a compressor (Figure 34).
$\theta$ = The included angle of the side of an expansion chamber as measured from the axis of rotation of the expansion rotor (Figure 33).
$\delta$ = The included angle of the radial orientation of the compressors as measured from the axis of rotation of the expansion rotor (Figure 12).
GEAR RATIO = The number of revolutions of a compressor per revolution of the expansion rotor.

The engine 100 is an eight compressor hyper-expansion engine with eight expansion vanes 122 and a compressor 102 to expansion rotor 104 GEAR RATIO of 1:1 and has the following values:

$\alpha$ = 35.0 degrees
$\beta$ = 9.0 degrees
$\gamma$ = 22.5 degrees
$\theta$ = 22.5 degrees
$\delta$ = 45.0 degrees

This yields an intake duration of 325 degrees, a compression duration of 31.5 degrees, an expansion duration of 48.5 degrees and an exhaust duration of 45 degrees. The ratio of $\alpha$ to $\beta$ approximately represents the ratio of expansion volume to intake volume. In this case, the ratio is around 4 to 1, but the actual expansion ratio is 3.5 to 1 because the

EP 0 485 465 B1

exhaust phase begins before the expansion volume has reached its maximum. In this case, γ and θ are equal but this is not required. In the current version of the proposed engine, the included angle of the intake chamber equals the included angle of the compression vane measured from the axis of rotation of the compressor. The same is true for the expansion chamber and the expansion vane. However, the only rigid requirement is that the sum of the included angles of a chamber plus a vane times the number of vanes must equal 360 degrees.

For example, by decreasing γ to 15 degrees, this increases the included angle of a compression vane to 30 degrees (8*(15+30) = 360). This affects the proportions of the expansion chamber with the expansion vane in the opposite way but with the same requirement, the sums of the included angle of an expansion chamber and the included angle of an expansion vane times the number of expansion vanes must equal 360 degrees; however, θ becomes 30 degrees and the included angle of the expansion vane becomes 15 degrees. This is necessarily the case because of the included angle of a compression vane is increased, so must the included angle of the corresponding expansion chamber through which the vane must interact. A further ramification of these ratios is the ability to affect the displacement of the engine and the expansion ratio. All else remaining the same, if γ is reduced and, accordingly, θ is increased, then the displacement of the compressor is reduced but the expansion ratio is increased. The converse holds true as well.

If the GEAR RATIO is altered so that the compressors spin with twice the angular velocity of the expansion rotor (GEAR RATIO = 2:1) then the durations are modified according to the above equations, but more importantly, the efficiencies and power output are changed as well. Using Tables I-XI for the engine 10 as a thermodynamic comparison and keeping the original expansion volume the same, the displacement of the engine 100 becomes twice that of the original, from 50cc to 100cc. The expansion ratio is cut in half from 3.5:1 down to 1.75:1. By reintroducing these new values into the thermodynamic equations, the Indicated Thermal Efficiency is reduced from 0.55 to 0.47 and The Indicated Mean Effective Pressure is reduced from 355 psi to 300 psi. These reductions are due to the reduction in the expansion ratio; however, the Horsepower goes up from 68.4 at 25,000 rpm of the expansion rotor 104 to 115.5 at the same speed. The power output is increased due to the increase in displacement. If the expansion ratio is increased to its former value, then the power output will jump to 136.8, twice the original output. It becomes evident that the GEAR RATIO can play an influential part in determining the characteristics of a multi-compressor hyper-expansion engine 100.

The intake process for the engine 100 is enhanced by a drastic increase in the intake duration. With the reciprocating engines, both two-stroke and four-stroke, and the Wankel engine, the intake process is hindered by short duration because all phases of the thermodynamic cycle occur at the same geometric location of the engine and with the same duration. The engine 100 allows the intake and compression phases to take place in the compressors 102 and the expansion and exhaust phases to take place within the expansion rotor 104. The substantially different phase durations of the engine 100 are due to the separation of the geometric locations of each phase. The increased intake duration will have a very direct and positive influence on the volumetric efficiency of the proposed engine, which is a direct measure of an engine's potential for doing work.

The greatly shortened compression phase is beneficial as well, because the gas is heated by the process of compression even before the burning of the fuel. This heat is also part of the potential work of an engine. If the air is compressed slowly, the heat will escape to the remainder of the engine by the process of conduction and some of the overall potential of the engine will be lost. This heat loss can be minimized by speeding up the compression phase.

The hyper-expansion phase is also considerably shortened with the same benefits. There is a reduction in the amount of time heat can be absorbed by the engine 100. This, however, makes it very critical to have adequate turbulence within the fuel/air mixture during combustion, because there will be less time for the combustion to take place.

Like the compression and hyper-expansion phases, the shortened exhaust phase duration is also beneficial, because this reduces the amount of time that the exhaust gases have to give up their remaining heat to the components of the engine 100. The exhaust gases can be collected in a separate area and processed, if required, to reduce pollutants. Unlike reciprocating engines, the exhaust gas is not used for scavenging, so there is no required overlap of the exhaust phase with the intake phase. The engine 100 optimizes of all of the necessary phases of the pumping and thermodynamic cycles.

The vanes 122 and 120 of the expansion rotor 104 and the compressors 102 are used as timing devices to control the intake and exhaust phases as well as the fuel injection and ignition processes. The intake and exhaust takes place through ports 150 and 130 in the engine's block 132 with the vanes 122 and 120 acting as the valves in the same manner as the piston in a two-stroke reciprocating engine. The vanes 122 of the expansion rotor 104 are also provided with a transfer passage 128. This passage allows the compression of the fuel/air mixture into the combustion chamber 204, and immediately following that, it exposes the continuous ignition device 158 by which the fuel/air mixture is ignited. There is also an exhaust port 130 in the expansion vanes 122 which allows the exhaust gas to escape through the expansion rotor 104 during the exhaust phase.

The fuel delivery is by direct fuel injection from a relatively simple fuel injection system. There is a fuel injector 146 for each of the compressors 102. Direct injection has benefits over indirect injection in that good atomization of the fuel occurs due to the increased pressure of delivery of a direct injection system. Typically, the injectors of a direct injection system are exposed to the direct heat of combustion and are susceptible to erosion; however, the injectors 146 of the engine 100 are masked from the direct heat of combustion by their location in the compression chamber 202, which is separate from the combustion chamber 204 so the injectors' longevity should be increased. The injection is physically timed by the vanes 120 of the compressors 102. This reduces the complexity of the fuel injection system because there is no need to pulse the injectors 146. The system need only adjust the flow rate of the injectors 146 according to the air flow characteristics. The fuel injectors 146 are plumbed to a common fuel rail (not shown), which is supplied via an appropriate fuel pump (not shown).

The ignition system is also simplified. The ignition source 158 is located next to the combustion chambers 204, with one ignition source 158 required per compressor 102. The ignition is physically timed by the vanes 122 of the expansion rotor 104, which eliminates the need for a separate ignition distributor. The ignition source 158 is the same in principle as that of the glow plug used in diesel engines. The source is heated to a constant temperature depending upon the thermal requirements of the compressed fuel/air mixture. The fuel/air mixture is then exposed to the ignition source 158 via the transfer passages 128 of the expansion vanes 122. That burning portion of the mixture then ignites the remainder of the mixture in the combustion chamber 204.

Lubrication is supplied from the oil pump 142, which is driven by the compressor drive shaft 114. The oil is pumped to the oil distribution channel 144 where it is distributed to each lubrication channel 144 located in each of the block sectors 166, where it is circulated to the gears and bearings and any other necessary areas and then returned via oil return passages 145 in the hollow drive shafts of the compressors 102 to the oil sump 140. The oil is kept away from the high temperature areas of the engine; therefore, it should not accumulate contaminants as readily nor get as hot as in conventional engines. This will increase the intervals between required oil changes.

An air cooled cooling system is anticipated to be adequate for cooling the engine 100, although a water cooled system can be implemented, if necessary. The hottest areas of the engine 100 are at its periphery, where it is most easy to take away extra heat. The periphery of the engine is finned and air is supplied via the fan 138 driven from the main shaft 106. This fan 138 could be replaced with a water pump if necessary and the fins 139 could be replaced by a water jacket.

The vanes 120 of the compressors 102 only need to maintain a seal during the compression and expansion phases. Because these phases occur in a relatively short time and within a small amount of actual rotor 102 and 104 rotation, the friction due to sealing can be greatly reduced. A large percentage of the compressors' rotation can be unencumbered with sealing devices. The vanes 122 of the expansion rotor 104 must, however, maintain an adequate seal for the entire rotation of the rotor 104. Sealing during these phases should be achieved by manufacturing tolerances sufficient to seal without actual contact of moving parts. The geometry of the vanes 120 and 122 of the rotors 102 and 104 combined with surface patterns on the walls of their respective chambers are believed to be adequate to stimulate enough turbulence to choke any leakage.

The ends of the compression and expansion vanes 120 and 122 must mesh as tightly as possible in order to seal and separate the phases of the thermodynamic cycle. Those sealing end surfaces 184, 185 and 186 are based upon portions of a helix generated about a torus. The following are the underlying mathematics for determining any cartesian point upon such a surface:

$$X = \sin(-\alpha/2 + \phi) * RADIUS.$$

$$Y = \cos(-\phi/GEAR\ RATIO) * ((\cos(-\alpha/2 + \phi) *$$

$$RADIUS) + center\text{-}DIST).$$

$$Z = \sin(-\phi/GEAR\ RATIO) * ((\cos(-\alpha/2 + \phi) *$$

$$RADIUS) + CENTER\text{-}DIST).$$

where:

$\alpha =$ The included angle of the end of an expansion vane as measured from the axis of rotation of a compressor (FIGURE 11).

$\phi =$ An angular increment used to determine the angular resolution of the surface (FIGURE 18).

RADIUS = The two-dimensional distance in the plane of the compressor from the axis of rotation of the compressor to the point in question (FIG. 11).

GEAR RATIO =   The number of revolutions of a compressor per revolution of the expansion rotor.

CENTER-DIST =   The perpendicular distance between the axis of rotation of the compressor to the axis of rotation of the expansion rotor (FIGURE 11).

These equations represent the meshing surfaces 184 and 185 for an expansion vane 122. The equations are bounded from $-\alpha/2$ to $\alpha/2$ by angular steps of size $\phi$. The meshing surface 186 of the compression vane 120 is some portion of the surfaces 184 and 185 generated for the expansion vane 122. The attributes of the interaction of the meshing surfaces 184 and 185 and 186 can be modified depending upon which portion between $-\alpha/2$ and $\alpha/2$ is used, keeping in mind that the total portion should be equal to the included angle of the end of a compression vane ($\beta$ in FIGURE 12).

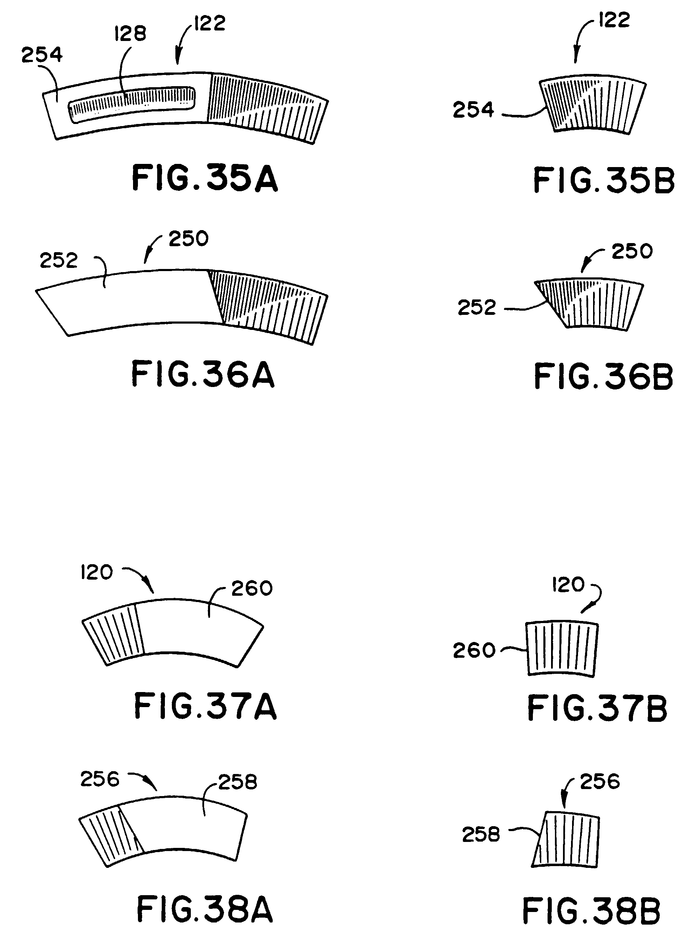

Figures 35A-35B and 36A-36B respectively show an expansion vane 122 from the engine 100 of Figures 10-15 and an expansion vane 250 for a variation of the engine 100 in which the separate combustion chamber 204 (Figures 20-24) is eliminated. In this engine, a combustion chamber is formed "on the fly" due to a revised vane geometry. This eliminates the need for the transfer passage 128 in the expansion vane 122. Side 252 of the expansion vane 250 has a much different angle than the corresponding side 254 of the expansion vane 122. By eliminating the fixed combustion chamber 204 and the transfer passage 128, scavenging losses are greatly reduced.

Figures 37A-37B and 38A-38B illustrate the difference between compression vane 120 of the Figures 10-15 engine and compression vane 256 for the engine without the fixed combustion chamber 204. Side 258 has a different angle than the corresponding side 260 of the compression vane 120.

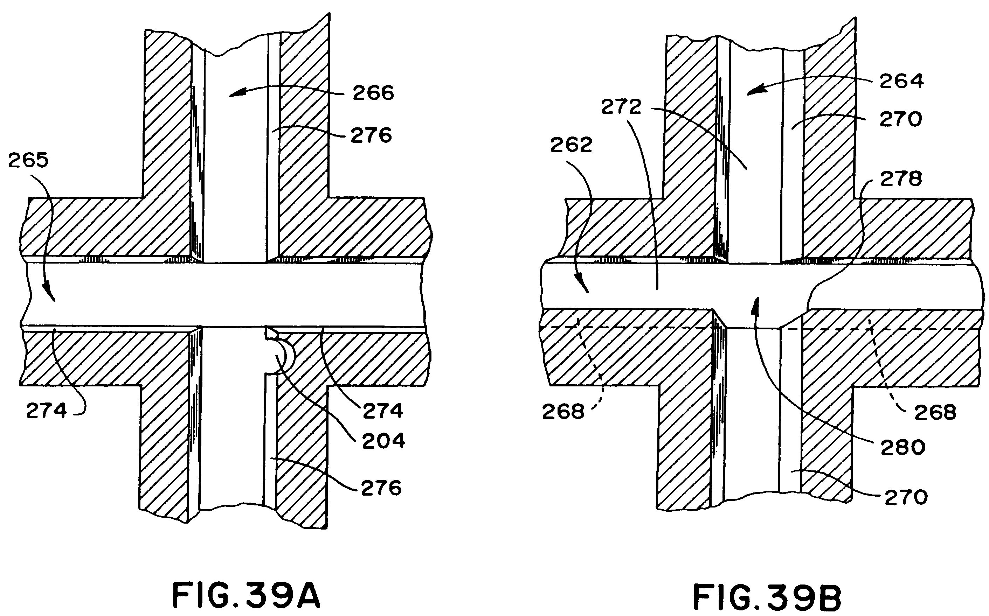

Figures 39A and 39B show changes in compression track 262 and expansion track 264 for the engine using compression vane 256 and expansion vane 250, compared with the compression track 265 and the expansion track 266 for the engine 100 of Figures 10-15, using the compression vane 120 and the expansion vane 122. Surfaces 268 and 270 have different angles with respect to bottoms 272 of the compression track 262 and expansion track 264, compared with the corresponding surfaces 274 and 276 in the compression track 265 and the expansion track 266. Combustion chamber 204 in the expansion track 266 has been eliminated in the expansion track 264. A chamfer 278 is present at intersection 280 between the compression track 262 and the expansion track 264.

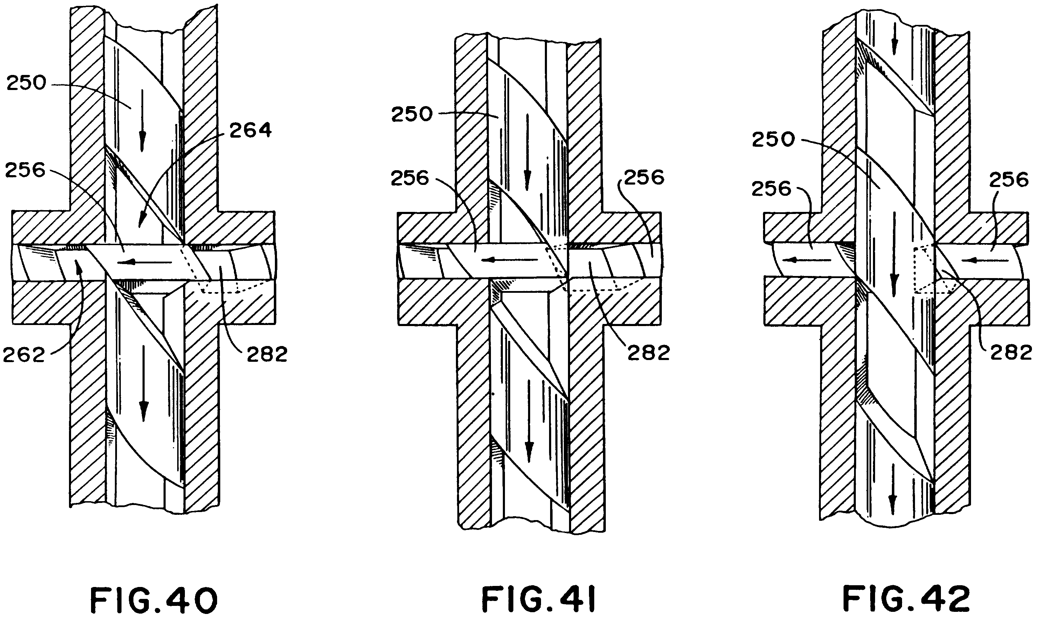

Figures 40-44 represent a series of stages of vane 250 and 256 interaction, based on the modified geometry of the compression vane 256, expansion vane 250, compression track 262 and expansion track 264. Figures 40-43 correspond respectively to Figures 5-8 for the engine 10 of Figures 1-4 and Figures 40-44 correspond respectively to Figures 24 and 20-23 for the engine 100 of Figures 10-15.

Briefly, in review of Figures 24 and 20-23, in Figure 24, the compression chamber 202 is at its maximum volume. As the vanes 120 and 122 continue to rotate in their respective directions, the volume of the compression chamber 202 is reduced, as shown by Figure 20, and the contents of the compression chamber 202 are directed via the transfer passage 128 in the expansion vane 122, as shown by Figure 21, into the combustion chamber 204.

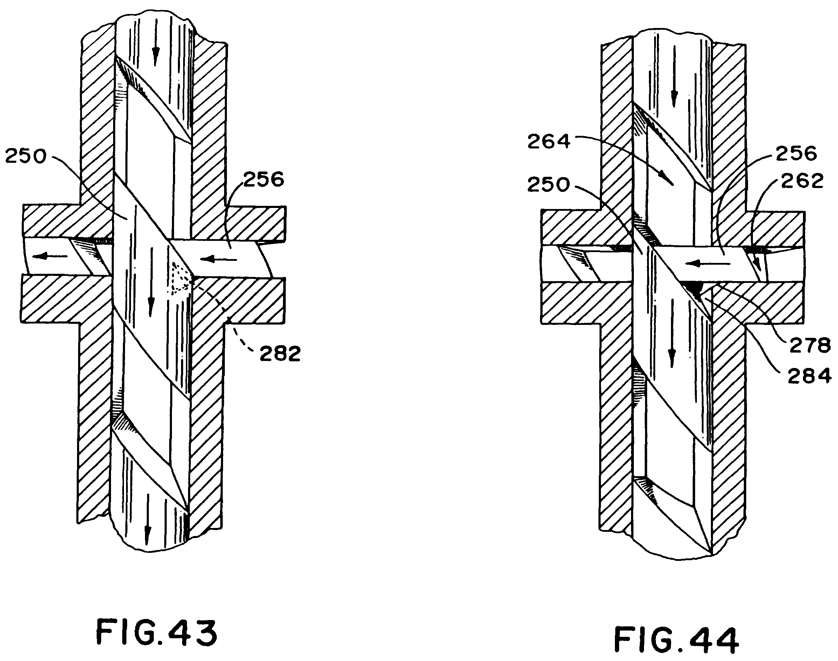

Figure 40 shows compression chamber 282 at its maximum volume. As the compression vane 256 and the expansion vane 250 continue to rotate in their respective directions, the volume of the compression chamber 282 is reduced, as shown in Figures 41 and 42. By Figure 43, the compression chamber 282 is completely defined by the vane 250 and 256 geometry and begins to take on the shape of a tetrahedron. Figure 44 shows the final shape of the compression chamber. At this point, the compression chamber becomes the combustion chamber 284. The combustion chamber 284 is in the shape of an inverted tetrahedron. Between Figures 43 and 44, the contents of the original compression chamber 282 as shown in Figure 40 are transferred to the tetrahedral combustion chamber 284, as the combustion chamber 284 is formed, via the chamfer 278 between the compression track 262 and the expansion track 264. The volume defined by this small chamfer 278 represents the only volume responsible for scavenging losses in the engine. Other than as shown and described, the construction and operation of an engine using the modified geometry and mode of operation of Figures 35A-44 is the same as that of the engine 100 of Figures 10-15.

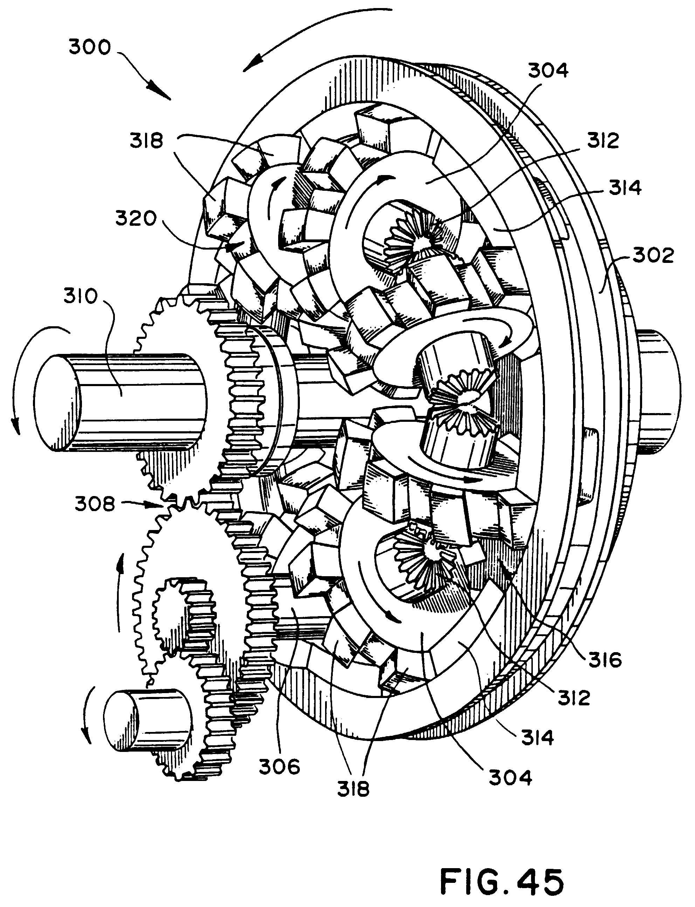

Figure 45 shows a machine 300 that can be used as a positive displacement compressor, expander or pump, depending upon the volumetric ratios of chambers defined by a single primary rotor 302 and a plurality of secondary rotors 304 and the communication path between those chambers. Figure 45 shows eight secondary rotors 304 radially oriented about the spin axis of the primary rotor 302. The secondary rotors 304 are driven with a secondary driveshaft 306, only one of which is shown in Figure 45. The secondary driveshaft 306 is geared at 308 to a primary driveshaft 310, and at its other end, to one of the secondary rotors 304. The remainder of the rotors 304 are then daisy chained, as shown at 312. More than one secondary driveshaft 306 can be used if necessary. The primary rotor 302 has a plurality of primary vanes 314, in between which are defined a plurality of primary chambers 316. The secondary rotors 304 each have a plurality of secondary vanes 318, in between which are defined a plurality of secondary chambers 320. The number of secondary vanes 318 and secondary chambers 320 is a function of the number of primary vanes 314 and the gear ratio between the primary and secondary rotors 302 and 304. It is the interaction of the primary and secondary vanes 314 and 318 and the chambers 316 and 320 thus formed which allow sufficient volumetric changes to occur to provide the necessary pumping actions of a compressor, expander or pump.

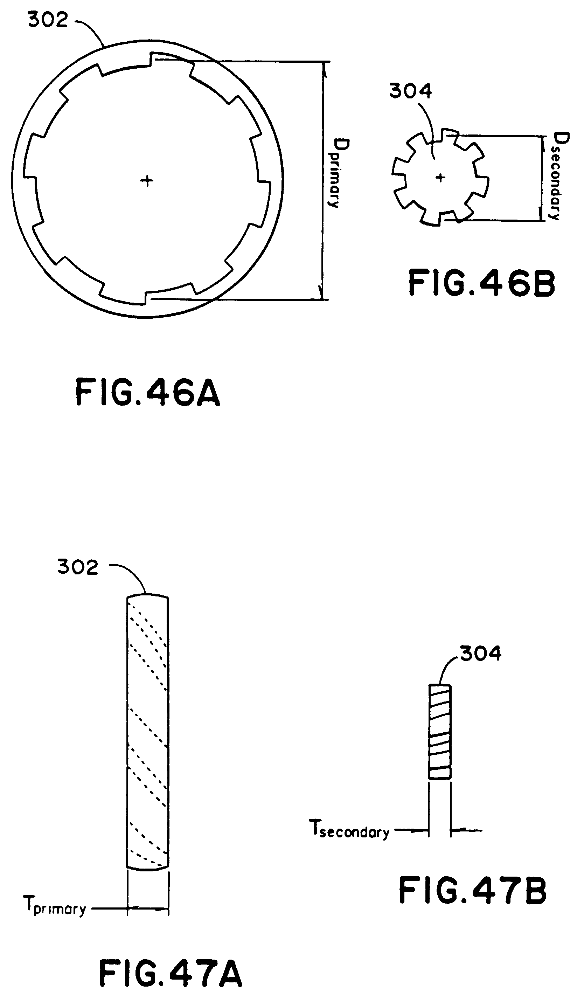

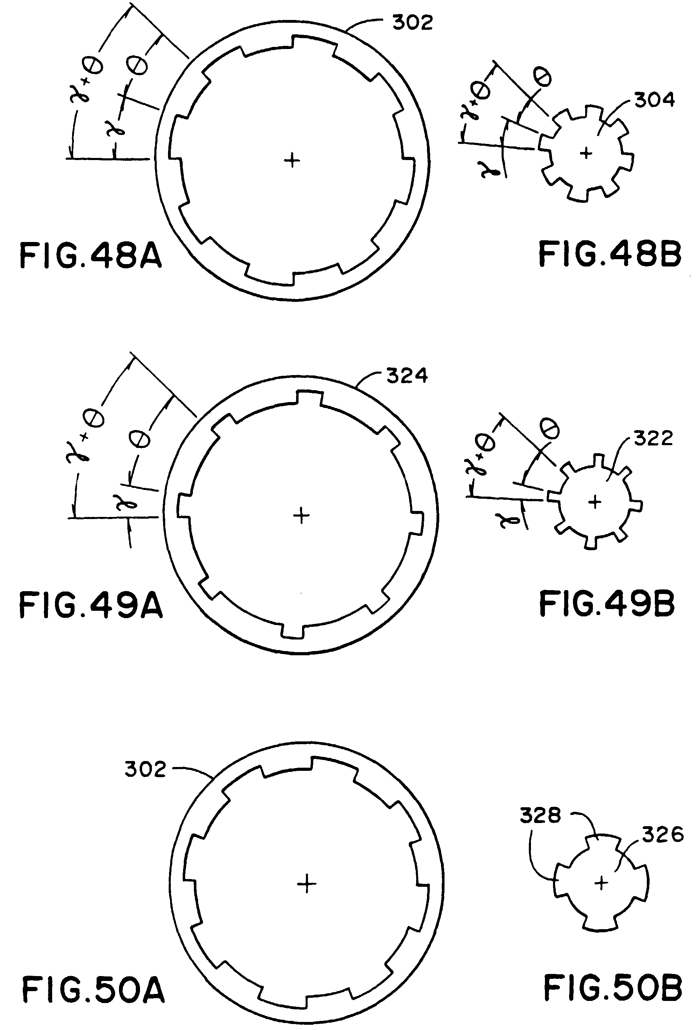

The volumetric ratios between the volumes of the primary and secondary chambers 316 and 320 can be altered by several parameters. The first parameter is the ratio of the mean diameter $D_{primary}$ of the primary chambers 316 as determined by the primary rotor 302 to the mean diameter $D_{secondary}$ of the secondary chambers 320 as determined by the secondary rotors 304, as shown in Figures 46A and 46B. The second parameter is the ratio of the thickness $T_{primary}$ of the primary chambers 316 as determined by the thickness of the primary rotor 302 to the thickness $T_{secondary}$ of the secondary chambers 320 as determined by the thickness of the secondary rotors 304, as shown in Figures 47A and 47B. The third parameter is the ratio of the radial included angles $\gamma$ and $\theta$ between that of a chamber and a vane, as shown in Figures 48A-49B. The sum of $\gamma$ and $\theta$ equals some value which is determined by other aspects of the geometry, but both $\gamma$ and $\theta$ can be assigned different values, so long as their sum remains constant. Notice that, if the value of $\gamma$ is increased for a secondary rotor 322, then the value of $\gamma$ is decreased for the primary rotor 324. This is necessarily so, due to the fact that the duration of a chamber has to be equal to the duration of a vane on the interacting rotor. The fourth parameter is the gear ratio between the primary driveshaft 310 and the secondary driveshaft 306. Figures 46A and 46B show primary and secondary rotors 302 and 304 with a gear ratio of 1:1. Notice that the number of vanes 314 and 318 for each rotor is equal. Figures 50A and 50B show the primary rotor 302 and a secondary rotor 326 with a gear ratio of 2:1. This means that the secondary rotor 326 spins with twice the angular velocity of the primary rotor 302. Therefore, the number of vanes 328 has been halved in comparison to the secondary rotor 304 of gear ratio 1:1. This change in gear ratio has effectively doubled the displacement that the secondary rotors 326 can process for each rotation of the primary rotor.

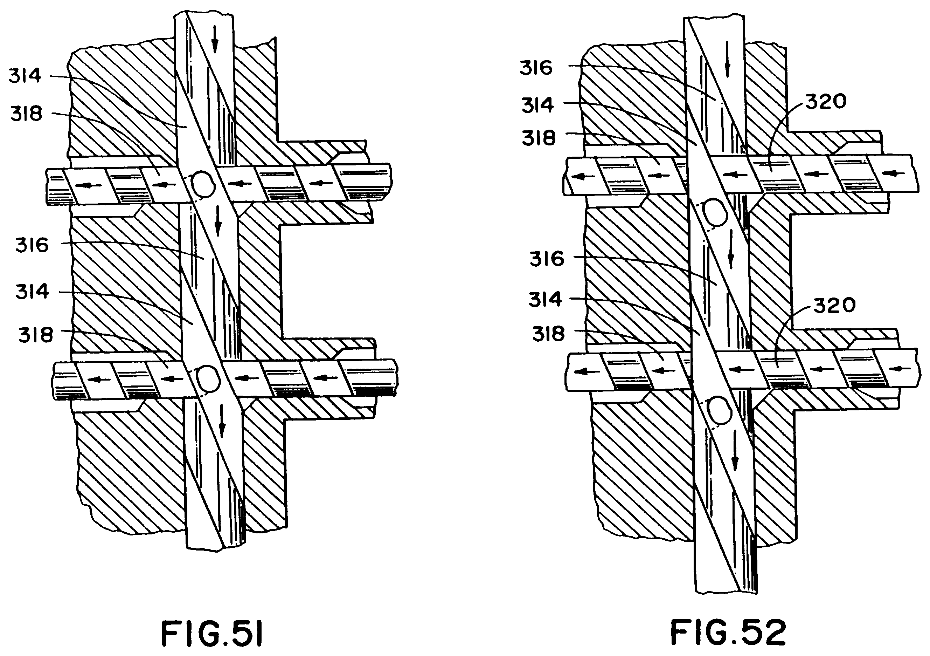

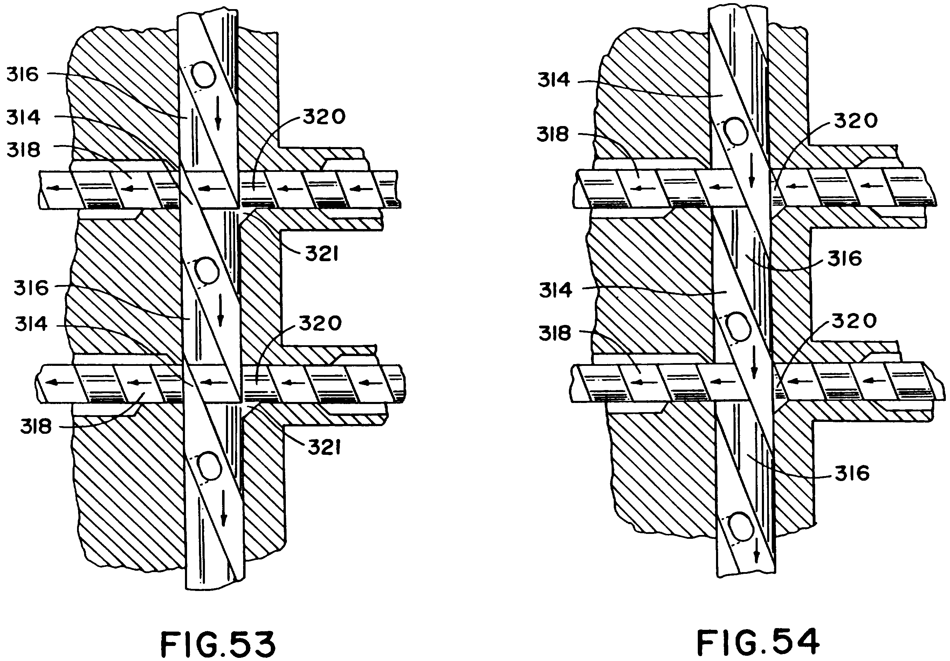

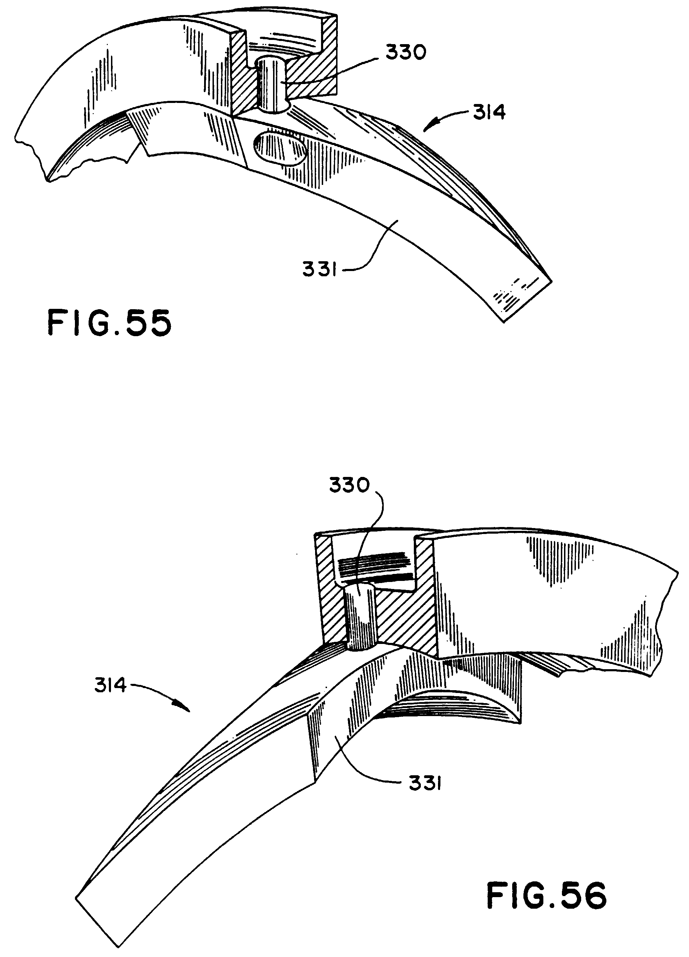

Figures 51-54 represent a sequence of vane 314 and 318 interaction. A working medium can be directed into the machine 300 through any suitable arrangement of ports, which can be throttled if desired, and an internal medium can be directed out of the machine through similar ports. Figure 55 shows a port 330 incorporated into the primary vane 314. As the vane 314 of one rotor 302 moves away from the vane 318 of the other rotor 304, the volume of a chamber 316 or 320 increases. As the vane 314 of one rotor 302 moves towards the vane 318 of the other rotor 304, the volume of the chamber 316 or 320 decreases. The volumes of four chambers 316 or 320 are being altered simultaneously at each interaction point. The number of interaction points depends on the number of secondary rotors.

By supplying a suitable passage 321 between chambers 316 and 320, the contents of one chamber 316 or 320 can be directed into another chamber 320 or 316 and, depending on which way the rotors 302 and 304 are spinning, the volumetric ratios between primary and secondary chambers 316 and 320, and the location of the passages and ports, the machine 300 can be configured as a compressor, expander or pump, or any combination thereof.

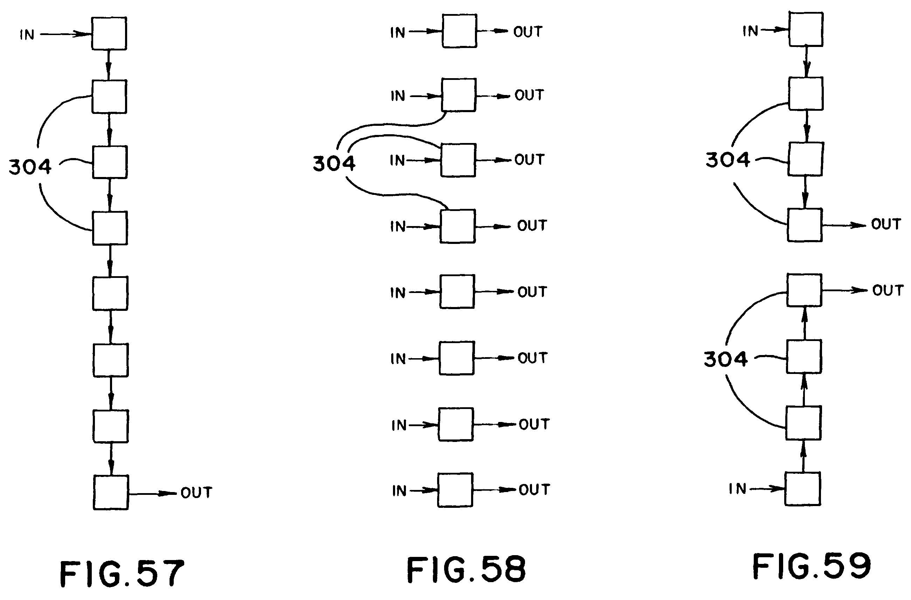

Figures 57-59 are block diagrams of a few potential variations of the machine 300. Figure 57 shows all of the secondary rotors 304 operating in series. By varying the volumetric ratios from rotor to rotor, the machine 300 could act as a multi-stage compressor or expander. Figure 58 shows all of the secondary rotors 304 acting in parallel. This arrangement is suitable as a pump for pumping the same or different kinds of medium. Figure 59 shows the machine 300 configured with a combination of secondary rotors 304 in series and in parallel. There are, of course, many additional ways that the machine 300 could be configured.

The ends 330 of the primary vanes 302 must mesh as tightly as possible with the ends of the secondary vanes 304 in order to seal and separate the primary and secondary chambers 314 and 320. These end surfaces, or meshing surfaces, are based upon portions of a helix generated about a torus.

Other than as shown and described, the construction and operation of the machine 300 is the same as that of the engine described with Figures 35A-44 and the engine 100 of Figures 10-15.

It should now be readily apparent to those skilled in the art that a novel toroidal hyper-expansion rotary engine capable of achieving the stated objects of the invention has been provided. The engine of this invention takes increased advantage of the potential efficiencies of an intermeshing rotor engine. In one form of the invention, each of the intermeshed rotors provides for both intake/compression and expansion/exhaust. In the engine, expansion of the compressed gas takes place to a volume greater than the original intake volume.

## Claims

1.  An intersecting vane machine, which comprises a supporting structure having an inside surface, first and second intermeshing rotors rotatably mounted in said supporting structure, said first rotor having a plurality of first vanes with an inner peripheral surface of said first rotor and said first vanes being transversely concave, with spaces between consecutive pairs of said first vanes and said inside surface defining a plurality of primary chambers, said second rotor having a plurality of second vanes with an outer peripheral surface of said second rotor and said second vanes being transversely convex, with spaces between consecutive pairs of said second vanes and said inside surface defining a plurality of secondary chambers, with a first axis of rotation of said first rotor and a second axis of rotation of said second rotor arranged so that said axes of rotation do not intersect, and said first rotor and said second rotor being arranged so that each of said first vanes and said primary chambers and said second vanes and said secondary chambers pass through a singular common intersection.

2. The machine of Claim 1 comprised of said first rotor and a plurality of said second rotors, said first rotor having a transversely concave inner surface with a plurality of said vanes attached to said inner surface, said second rotors having a transversely convex outer surface with a plurality of said second vanes attached to said outer surface, said first vanes becoming primary vanes and said second vanes becoming secondary vanes.

3. The machine of Claim 1 in which said first rotor and said second rotor each have a plurality of said first vanes and said second vanes, said first rotor and said second rotor each having a toroidal configuration and being interlocked by having each rotor pass through a center portion of the other rotor.

4. The machine of Claim 1 in which said first rotor, second rotor, first vanes and second vanes are positioned and configured so that said second vanes engage said first vanes and inside surface of said supporting structure as said first and second rotors rotate with respect to each other to form a substantial clearance volume or combustion chamber as a result of a dissimilarity in shape between a first cross-sectional geometry of said first vanes and a second cross-sectional geometry of said second vanes as said first and second vanes engage within said supporting structure.

5. The machine of Claim 1 in which said machine is an engine in which said second vanes are intake/compression vanes and said first vanes are expansion/exhaust vanes.

**Patentansprüche**

1. Sich kreuzende Schaufeln aufweisende Maschine mit einem Tragaufbau, der eine Innenfläche und einen ersten und einen zweiten Rotor aufweist, die ineinandergreifen und drehbar in dem Tragaufbau gelagert sind,

   - wobei der erste Rotor eine Vielzahl von ersten Schaufeln hat,
   - wobei eine innere Umfangsfläche des ersten Rotors und die ersten Schaufeln transversal konkav sind,
   - wobei zwischen aufeinanderfolgenden Paaren der ersten Schaufeln und der Innenfläche Räume vorhanden sind, die eine Vielzahl von primären Kammern bilden,
   - wobei der zweite Rotor eine Vielzahl von zweiten Schaufeln hat,
   - wobei eine äußere Umfangsfläche des zweiten Rotors und die zweiten Schaufeln transversal konvex sind,
   - wobei zwischen aufeinanderfolgenden Paaren der zweiten Schaufeln und der Innenfläche Räume vorhanden sind, die eine Vielzahl von sekundären Kammern bilden,
   - wobei eine erste Drehachse des ersten Rotors und eine zweite Drehachse des zweiten Rotors so angeordnet sind, daß die Drehachsen sich nicht kreuzen, und
   - wobei der erste Rotor und der zweite Rotor so angeordnet sind, daß jede der ersten Schaufeln und die primären Kammern und die zweiten Schaufeln und die sekundären Kammern durch eine singuläre gemeinsame Kreuzungsstelle hindurchgehen.

2. Maschine nach Anspruch 1 mit dem ersten Rotor und einer Vielzahl von zweiten Rotoren, wobei der erste Rotor eine transversal konkave Innenfläche hat, an der eine Vielzahl der Schaufeln befestigt ist, die zweiten Rotoren eine transversal konvexe Außenfläche haben, an der eine Vielzahl der zweiten Schaufeln befestigt ist, und die ersten Schaufeln primäre Schaufeln und die zweiten Schaufeln sekundäre Schaufeln werden.

3. Maschine nach Anspruch 1, bei welcher der erste Rotor und der zweite Rotor jeweils eine Vielzahl der ersten Schaufeln und der zweiten Schaufeln aufweisen und der erste Rotor und der zweite Rotor jeweils eine Toroidform haben und sich gegenseitig durchdringen, indem jeder Rotor durch einen Mittenabschnitt des anderen Rotors hindurchgeht.

4. Maschine nach Anspruch 1, bei welcher der erste Rotor, der zweite Rotor, die ersten Schaufeln und die zweiten Schaufeln so positioniert und gestaltet sind, daß die zweiten Schaufeln in die ersten Schaufeln und die Innenfläche des Tragaufbaus eingreifen, wenn der erste Rotor und der zweite Rotor sich bezüglich einander drehen und ein wesentliches Freiraumvolumen oder eine Verbrennungskammer als Folge der Formverschiedenheit zwischen einer ersten Querschnittsform der ersten Schaufeln und einer zweiten Querschnittsform der zweiten Schaufeln bil-

**EP 0 485 465 B1**

den, wenn die ersten und zweiten Schaufeln in den Tragaufbau eingreifen.

5. Maschine nach Anspruch 1, bei welcher die Maschine eine Vorrichtung ist, bei welcher die zweiten Schaufeln Einlaß-/Kompressionsschaufeln und die ersten Schaufeln Expansions-/Auslaßschaufeln sind.

**Revendications**

1. Machine à pales intersectées, qui comprend une structure de support ayant une surface intérieure, des premier et second rotors engrenés l'un dans l'autre, montés de façon rotative dans ladite structure de support, ledit premier rotor comprenant plusieurs premières pales, une surface périphérique intérieure dudit premier rotor et desdites premières pales étant transversalement concave, des espaces existant entre des paires successives desdites premières pales et ladite surface intérieure, définissant ainsi plusieurs chambres primaires, ledit second rotor comprenant plusieurs secondes pales, une surface périphérique extérieure dudit second rotor et desdites secondes pales étant transversalement convexe, des espaces existant entre des paires successives desdites secondes pales et ladite surface intérieure, définissant ainsi plusieurs chambres secondaires, un premier axe de rotation dudit premier rotor et un second axe de rotation dudit second rotor étant agencés de manière telle que lesdits axes de rotation ne se coupent pas, et ledit premier rotor et ledit second rotor étant agencés de manière telle que chacune desdites premières pales et desdites chambres primaires, et chacune desdites secondes pales et desdites chambres secondaires, passent par un point d'intersection commun unique.

2. Machine selon la revendication 1, constituée dudit premier rotor et de plusieurs desdits seconds rotors, ledit premier rotor ayant une surface intérieure transversalement concave et plusieurs desdites pales reliées à ladite surface intérieure, lesdits seconds rotors ayant une surface extérieure transversalement convexe et plusieurs desdites secondes pales reliées à ladite surface extérieure, lesdites premières pales devenant des pales primaires et lesdites secondes pales devenant des pales secondaires.

3. Machine selon la revendication 1, dans laquelle ledit premier rotor et ledit second rotor comportent chacun plusieurs desdites premières pales et desdites secondes pales, ledit premier rotor et ledit second rotor présentant chacun une configuration toroïdale et étant imbriqués l'un dans l'autre en ce que chaque rotor passe par une partie centrale de l'autre rotor.

4. Machine selon la revendication 1, dans laquelle ledit premier rotor, le second rotor, les premières pales et les secondes pales sont positionnés et configurés de manière telle que lesdites secondes pales s'engagent dans lesdites premières pales et la surface intérieure de ladite structure de support, lorsque lesdits premier et second rotors tournent l'un par rapport à l'autre, de manière à former un volume de jeu substantiel, ou chambre de combustion, en raison d'une dissimilitude de la forme d'une première géométrie de section transversale desdites premières pales par rapport à une seconde géométrie de section transversale desdites secondes pales, lorsque lesdites premières et secondes pales sont en engagement mutuel à l'intérieur de ladite structure de support.

5. Machine selon la revendication 1, dans laquelle ladite machine est un moteur, dans lequel lesdites secondes pales sont des pales d'admission/de compression, et lesdites premières pales sont des pales d'expansion/d'échappement.

FIG. 1

FIG. 2

FIG. 3

FIG. 4

EP 0 485 465 B1

FIG. 6

FIG. 5

23

FIG. 8

FIG. 7

FIG. 9

FIG.10

FIG. 11

FIG. 12

FIG. 13

FIG. 14

FIG. 15

FIG. 16

FIG. 17

FIG. 18

FIG. 19

FIG. 20

FIG. 22

FIG. 21

FIG.24

FIG.23

## 4-STROKE SINGLE CYLINDER RECIPROCATING ENGINE

| PHASE | DURATION |
|---|---|
| INTAKE | 180° |
| COMPRESSION | 180° |
| EXPANSION | 180° |
| EXHAUST | 180° |

ONE EXPANSION PHASE FOR EVERY 720° OF CRANK ROTATION.

DEGREES OF CRANKSHAFT ROTATION

# FIG.25
(PRIOR ART)

## 4-STROKE FOUR CYLINDER RECIPROCATING ENGINE

TWO EXPANSION PHASES FOR EVERY 360° OF CRANK ROTATION.

DEGREES OF CRANKSHAFT ROTATION

# FIG.26
(PRIOR ART)

## 2-STROKE SINGLE CYLINDER RECIPROCATING ENGINE

| PHASE | DURATION |
|---|---|
| INTAKE | 120° |
| COMPRESSION | 120° |
| EXPANSION | 120° |
| EXHAUST | 120° |

ONE EXPANSION PHASE
FOR EVERY 360° OF
CRANK ROTATION.

DEGREES OF CRANKSHAFT ROTATION

# FIG.27
## (PRIOR ART)

## SINGLE ROTOR WANKEL ROTARY ENGINE

| PHASE | DURATION |
|---|---|
| INTAKE | 90° |
| COMPRESSION | 90° |
| EXPANSION | 90° |
| EXHAUST | 90° |

THREE EXPANSION PHASES
EVERY 360° OF
ROTOR ROTATION.

DEGREES OF ROTOR ROTATION

# FIG.28
## (PRIOR ART)

SINGLE COMPRESSOR HYPER - EXPANSION ENGINE

| PHASE | DURATION | |
|---|---|---|
| INTAKE | 325 ° | ONE EXPANSION PHASE |
| COMPRESSION | 189 ° | FOR EVERY 360° OF |
| EXPANSION | 206 ° | ROTOR ROTATION. |
| EXHAUST | 360 ° | |

DEGREES OF EXPANSION ROTOR ROTATION

# FIG.29

TWO COMPRESSOR HYPER - EXPANSION ENGINE

| PHASE | DURATION | |
|---|---|---|
| INTAKE | 325 ° | TWO EXPANSION PHASES |
| COMPRESSION | 99 ° | EVERY 360° OF ROTOR |
| EXPANSION | 116 ° | ROTATION PER COMPRESSOR. |
| EXHAUST | 180 ° | |

DEGREES OF EXPANSION ROTOR ROTATION

# FIG.30

## FOUR COMPRESSOR HYPER-EXPANSION ENGINE

| PHASE | DURATION |
|---|---|
| INTAKE | 325 ° |
| COMPRESSION | 54 ° |
| EXPANSION | 71 ° |
| EXHAUST | 90 ° |

FOUR EXPANSION PHASES
FOR EVERY 360° OF ROTOR
ROTATION PER COMPRESSOR.

DEGREES OF EXPANSION ROTOR ROTATION

**FIG.31**

## EIGHT COMPRESSOR HYPER-EXPANSION ENGINE

| PHASE | DURATION |
|---|---|
| INTAKE | 325 ° |
| COMPRESSION | 31.5 ° |
| EXPANSION | 48.5 ° |
| EXHAUST | 45 ° |

EIGHT EXPANSION PHASES
FOR EVERY 360° OF ROTOR
ROTATION PER COMPRESSOR.

DEGREES OF EXPANSION ROTOR ROTATION

**FIG.32**

40

FIG.33

FIG.34

**FIG.35A**

**FIG.35B**

**FIG.36A**

**FIG.36B**

**FIG.37A**

**FIG.37B**

**FIG.38A**

**FIG.38B**

FIG. 39A

FIG. 39B

EP 0 485 465 B1

EP 0 485 465 B1

FIG.40

FIG.41

FIG.42

FIG.43

FIG.44

EP 0 485 465 B1

FIG.45

302

$D_{primary}$

**FIG.46A**

304

$D_{secondary}$

**FIG.46B**

302

$T_{primary}$

**FIG.47A**

304

$T_{secondary}$

**FIG.47B**

FIG.48A

FIG.48B

FIG.49A

FIG.49B

FIG.50A

FIG.50B

FIG.51

FIG.52

EP 0 485 465 B1

FIG.54

FIG.53

FIG.55

FIG.56

IN

304

OUT

**FIG.57**

IN → OUT
IN → OUT
304 IN → OUT
IN → OUT

IN → OUT
IN → OUT
IN → OUT
IN → OUT

**FIG.58**

IN

304

OUT

OUT

304

IN

**FIG.59**